# EUROPEAN PATENT APPLICATION

(11) **EP 4 393 988 A1**
(43) Date of publication of application: **03.07.2024**
(21) Application number: 22217013.6
(22) Date of filing: 28.12.2022
(51) Int. Cl.: C08K 3/04, C08L 23/10, C08K 7/14, G01S 13/931, G01S 7/02, C08L 83/10

(54) **POLYPROPYLENE COMPOSITIONS WITH ENHANCED MICROWAVE ABSORPTION AND REDUCED MICROWAVE REFLECTION**

(71) Applicant: SHPP Global Technologies B.V., 4612 PX Bergen op Zoom (NL)
(72) Inventor: SILVI, Norberto, Selkirk, 12158 (US)
(74) Representative: Modiano, Gabriella Diana

(57) **Abstract**

A composition includes a thermoplastic resin including: a polypropylene polymer; and from about 0.15 wt% to about 4.75 wt% of a filler comprising carbon nanotubes. The carbon nanotubes have an average diameter of about 5-15 nanometers (nm), a surface area of at least about 100 square meters per gram (m²/gr), and a volume resistivity of 10⁻³ Ohm.centimeters (Ohm.cm) or lower. The composition exhibits a volume electrical resistivity between 2.0E+14 Ohm.cm and 1.0E+03 Ohm.cm, and a molded sample of the composition exhibits a percent Absorbed Power measured in Transmission mode of at least 65% at frequencies of from about 75 GHz to about 110 GHz. Molded articles including micron-sized features that provide the article with high absorption and low reflection properties are also described.

## Description

### FIELD OF THE DISCLOSURE

The present disclosure relates to thermoplastic compositions having good microwave absorption properties, and in particular to compositions including a polypropylene polymer and carbon nanotubes.

### BACKGROUND OF THE DISCLOSURE

According to the Association For Safe International Road Travel (ASIRT), over 1 million people die in road crashes each year, with tens of millions being injured or disabled. Road traffic crashes rank as a leading cause of death, costing over USD $500 billion globally, a substantial portion of individual countries' annual GDP. Unless action is taken, road traffic injuries are predicted to become the fifth leading cause of death by 2030 (*Association For Safe International Road Travel* - *ASIRT, 2016).* For these reasons, the automotive industry is increasingly making use of Advanced Driver Assistance Systems (ADAS) to provide drivers assistance with features such as adaptive cruise control, self-parking, back-up warning, blind spot detection, lane departure warning, collision avoidance, pedestrian detection, and many others.

Due to their decreased cost and increased availability, radar sensors are common in automotive safety today and are used in most advanced ADAS systems. These automotive radar systems can be divided into three sub-categories depending on the range or distance over which they operate: short-range, mid-range and long-range automotive radars. Each of these sensors has different applications, with long-range radars (range over 100 meters or so) being usually used for forward collision avoidance and adaptive cruise control, operating mainly in the W-band of the electromagnetic spectrum at frequencies between about 75 and 110 GHz. Short- and mid-range radars (range in the tens of meters), on the other hand, are used for blind-spot detection, parking assist systems, pre-crash alerts, or lane departure warnings, and operate mainly in the K-band at frequencies between about 18 and 26.5 GHz. Since there are strict regulations regarding power output at lower frequencies that are currently being implemented, it is anticipated that the K-band frequency range will be used less often in automotive radar sensors of ADAS applications *(Source:* Burger, R., Salinero, T., Sumida, S., "Beyond The Headlights: ADAS and Autonomous Sensing"; Market Report, Woodside Capital Partners; September 2016*).*

For radar sensors to operate effectively, they need to be protected from spurious sources of electromagnetic radiation. Since metals are inherently reflectors of microwave radiation and therefore poor absorbers, they have proven to be of limited value when used in applications that require a high level of microwave absorption and a low level of microwave reflection. Polymer/carbon composites, on the other hand, are preferred over metals not only because of their much higher microwave absorption properties, but also because of their lower density and cost, easier shaping and more straightforward manufacturability into high volume molded parts. Carbon fillers, in general, can trap or deflect microwave (MW) radiation impinging on enclosure walls thus protecting the electronic sensors inside the cavity. Moderately high dielectric constant and electrical conductivity, and large dielectric and magnetic losses are some of the features required for materials used in microwave shielding. In certain applications, carbon nanotubes are preferred over carbon powder, graphite or carbon fibers since they provide adequate microwave interference performance at relatively low loadings. Lower loadings of carbon, for example, would result in improvements to the ductility, impact strength, surface aesthetics, and flow of these materials under high shear rate conditions. The amount of carbon filler used in these compositions usually depends on the type of carbon used, with carbon fibers and carbon nanotubes requiring low loadings to achieve relatively high levels of microwave absorption. Carbon black powders of low structure (large particle size, small specific surface area), on the other hand, require higher loadings when used in resins designed to achieve the same microwave absorbing performance. Regardless of the filler type used in these formulations, if the amount of carbon is too small, transmission will be high and absorption and reflection will both be low, and if the amount of carbon is too large, transmission will usually be low and reflection will be high. It can thus be important to select the adequate combination of type and loading of the carbon filler when designing materials that are good microwave absorbers but poor microwave reflectors when used in radar sensors at relatively high frequencies of operation.

Microwave radiation (-1-300 GHz frequency, -300-1 mm wavelength) is the most common source of electromagnetic energy used in the operation of radar sensors for automotive applications. Metals (aluminum, stainless steel, etc.), polymer composite materials containing metallic fillers such as aluminum flakes, stainless steel fibers or silver-coated polyamide fibers, metalized coatings, inherently conductive polymers like polyacetylene, polypyrrole, polythiophene, polyaniline, etc., silicon carbide, ferrites (Fe₂O₃ + Ni/Zn/Cd/Co secondary oxide), iron silicide and iron penta-carbonil are some of the materials being used in ADAS applications to shield automotive safety sensors from damaging microwave electromagnetic radiation. Metals are the most common materials for MW interference shielding, but they are heavy, expensive, and demand complex processing to be shaped into a final part. Polymer/carbon composites, on the other hand, are preferred due to their low density, low cost, easy shaping, and manufacturability into high volume molded parts.

Carbon (powder, platelets, fibers, nanotubes, etc.) is emerging as a filler of choice to impart electromagnetic interference properties to thermoplastic polymers, which when unfilled are mostly transparent (non-absorbing, non-reflecting) to microwave radiation. When used in under-the-hood automotive enclosures, for example, polymer-carbon thermoplastic composites can protect the sensors located inside the enclosure thus preventing the electromagnetic radiation from an outside source to deteriorate the sensor's electronic performance. Also, carbon-containing elastomers such as silicone, polyurethane and nitrile rubber, among several others, can be used as high-loss, protective, and deformable sheets or blankets to attenuate the resonant frequencies generated by the normal operation of the sensors inside a cavity. Besides thermoplastics and elastomers, these radar shielding materials are also sold commercially in the form of liquid paints, powder coatings and closed-cell polymer foams. Electrical conductivity, dielectric and magnetic losses, frequency of the incoming radiation, and thickness of the enclosure wall are some of the features that are expected to affect the microwave interference performance of these materials.

The choice of microwave shielding material to be used in a given situation depends to some extent on the environment surrounding the electronic component (antenna, printed circuit board, imaging equipment for medical applications, etc.) to be protected. When the incoming radiation to be suppressed or minimized originates outside of the component to be protected, a material with reflecting microwave properties, such as a metallic plate (aluminum, stainless steel, etc.), or a polymer composite containing metallic fillers (such as those from SABIC's Faradex^{™} product line) may be all that is needed. In this case, the enclosure protects the electronic components by reflecting off the incoming radiation away from the cavity. If the incoming radiation originates inside the cavity to be protected, on the other hand, a material that absorbs microwave energy may need to be selected to isolate the sensor components from standing electromagnetic waves (oscillations) caused by cavity resonance. Microwave absorbers can also be used to cover the inside walls of testing anechoic chambers, thus eliminating unwanted reflections that would otherwise negatively affect the dielectric response of the material being tested inside the chamber.

There are several dielectric properties that radar designers consider when selecting materials for microwave radar interference. Complex permittivity (real and imaginary parts), amount of radiation Absorbed, Reflected or Transmitted by the material, Shielding Effectiveness, Reflection Loss and Attenuation are only some of the material properties of interest for the manufacture of plastic components for radar sensor applications. As noted, the frequency of the incoming radiation and material thickness are also important when trapping microwave energy that if not eliminated or minimized could interfere with the normal operation of the automotive electronic sensors.

Radar sensors for automotive applications include Radome-type plastic components, which are mostly transparent to microwave radiation, and Absorber-type plastic components, which trap microwave energy in a certain frequency range to protect the sensor from outside radiation interference. These plastics components are usually formed into the final part using relatively high injection pressures and melt temperatures to produce molded articles that are smooth in appearance and free of surface features. Microwave absorbing materials made from carbon as the microwave absorbing filler and molded into parts of smooth surface can only provide a certain level of (high) microwave absorption and (low) microwave reflection, which may render these materials of limited value when used in automotive radar sensors that require relatively high levels of absorption and low levels of reflection when performing in the W-band of the electromagnetic spectrum.

These and other shortcomings are addressed by aspects of the disclosure.

### SUMMARY

Aspects of the disclosure relate to compositions including a thermoplastic resin, wherein the thermoplastic resin includes a polypropylene polymer and from about 0.15 wt% to about 4.75 wt% of a filler including carbon nanotubes. The carbon nanotubes have an average diameter of about 5-15 nanometers (nm), a surface area of at least about 100 square meters per gram (m²/gr), and a volume resistivity of 10⁻³ Ohm.centimeters (Ohm.cm) or lower. The composition exhibits a volume electrical resistivity between 2.0E+14 Ohm.cm and 1.0E+03 Ohm.cm when measured according to ASTM D257. A molded sample of the composition exhibits a percent Absorbed Power measured in Transmission mode of at least 65% when observed according to a Free Space method at frequencies of from about 75 GHz to about 110 GHz. The combined weight percent value of all components does not exceed 100 wt. %, and all weight percent values are based on the total weight of the composition.

Further aspects of the disclosure relate to an article including a molded plaque including a surface with micron-sized features, wherein an area of the molded plaque including the micron-sized features exhibits a percent Absorbed Power measured in Transmission mode of at least 85% and a percent Reflected Power measured in Transmission mode of 2% or lower when observed according to a Free Space method at frequencies of from about 75 GHz to 110 GHz. The micron-sized features have a height to base ratio of between 2:1 and 10:1, and the base has a characteristic length that is linear or a representative dimension of a square, rectangle, polygon, circle, or a combination thereof.

### BRIEF DESCRIPTION OF THE FIGURES

In the drawings, which are not necessarily drawn to scale, like numerals may describe similar components in different views. Like numerals having different letter suffixes may represent different instances of similar components. The drawings illustrate generally, by way of example, but not by way of limitation, various aspects discussed in the present document.
FIGS. 1A and 1B are graphs demonstrating notched and unnotched Izod impact properties at 23 °C and -30 °C, respectively, for comparative and example compositions according to aspects of the disclosure.
FIG. 2 is a graph showing surface and volume electrical resistivities for comparative and example compositions according to aspects of the disclosure.
FIG. 3 is a graph showing melt flow rate (MFR) for comparative and example compositions according to aspects of the disclosure.
FIGS. 4A and 4B are schematic depictions of the apparatus used to determine the dielectric properties of the materials of the disclosure using the Free Space Method for un-backed and metal-backed samples, respectively.
FIG. 5 is a graph showing percent power in transmission mode (reflected, absorbed and transmitted) at 77 GHz for comparative and example compositions according to aspects of the disclosure.
FIGS. 6A-6C are graphs showing the real part of complex dielectric permittivity, imaginary part of complex dielectric permittivity, and attenuation constant, respectively, for comparative and example compositions according to aspects of the disclosure.
FIG. 7 is a graph showing total shielding effectiveness for comparative and example compositions according to aspects of the disclosure.
FIG. 8 is a graph showing percent power absorbed in transmission mode for comparative and example compositions according to aspects of the disclosure.
FIG. 9 is a graph showing percent power absorbed in metal-backed reflection mode for comparative and example compositions according to aspects of the disclosure.
FIG. 10 is a graph showing percent power in transmission mode (absorbed, reflected and transmitted) for composition Ex1.3.
FIG. 11 is a graph showing percent power in transmission mode (reflected, absorbed and transmitted) at 77 GHz for example compositions according to aspects of the disclosure.
FIGS. 12A-12C are graphs showing the real part of complex dielectric permittivity, imaginary part of complex dielectric permittivity, and attenuation constant, respectively, for example compositions according to aspects of the disclosure at frequencies of from 75-110 GHz.
FIG. 13 is a graph showing total shielding effectiveness for example compositions according to aspects of the disclosure at frequencies of from 75-110 GHz.
FIG. 14 is a graph showing percent power absorbed in transmission mode for example compositions according to aspects of the disclosure at frequencies of from 75-110 GHz.
FIGS. 15A and 15B are graphs showing percent power in transmission mode and percent power in metal-backed reflection mode (absorbed, reflected and transmitted), respectively, of composition Ex2.3 observed on a 3.1 mm thick sample at frequencies of from 75-110 GHz.
FIGS. 16A and 16B are 2D front and side perspective sketches of geometric features according to aspects of the disclosure.
FIGS. 17A and 17B are microscopy images showing a top view and cross-sectional view, respectively, of the 2D triangular wedges imprinted on the surface of smooth molded parts according to aspects of the disclosure.
FIGS. 18A-18C are images of exemplary three-dimensional (3D) imprinted features according to aspects of the disclosure.
FIGS. 19A and 19B are schematic depictions of the apparatus for testing imprinted plaques in transmission mode and metal-backed reflection mode, respectively.
FIGS. 20A and 20B are graphs showing dielectric properties of imprinted composition Ex2.3 measured in transmission mode and metal-backed reflection mode, respectively, at frequencies of from 75-110 GHz.
FIG. 21 is a graph showing percent power in transmission mode of conventional carbon black compositions at 77 GHz.
FIG. 22 is a graph showing percent power in transmission mode at 77 GHz of example and conventional compositions with and without imprints.

### DETAILED DESCRIPTION

Before the present compounds, compositions, articles, systems, devices, and/or methods are disclosed and described, it is to be understood that they are not limited to specific synthetic methods unless otherwise specified, or to particular reagents unless otherwise specified, as such can, of course, vary. It is also to be understood that the terminology used herein is for the purpose of describing particular aspects only and is not intended to be limiting.

Various combinations of elements of this disclosure are encompassed by this disclosure, e.g., combinations of elements from dependent claims that depend upon the same independent claim.

Moreover, it is to be understood that unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is in no way intended that an order be inferred, in any respect. This holds for any possible non-express basis for interpretation, including: matters of logic with respect to arrangement of steps or operational flow; plain meaning derived from grammatical organization or punctuation; and the number or type of aspects described in the specification.

All publications mentioned herein are incorporated herein by reference to disclose and describe the methods and/or materials in connection with which the publications are cited.

### Definitions

It is also to be understood that the terminology used herein is for the purpose of describing particular aspects only and is not intended to be limiting. As used in the specification and in the claims, the term "comprising" can include the aspects "consisting of" and "consisting essentially of." Unless defined otherwise, all technical and scientific terms used herein have the same meaning as commonly understood by one of ordinary skill in the art to which this disclosure belongs. In this specification and in the claims which follow, reference will be made to a number of terms which shall be defined herein.

As used in the specification and the appended claims, the singular forms "a," "an" and "the" include plural referents unless the context clearly dictates otherwise. Thus, for example, reference to "a polypropylene polymer" includes mixtures of two or more polypropylene polymers.

As used herein, the term "combination" is inclusive of blends, mixtures, alloys, reaction products, and the like.

Ranges can be expressed herein as from one value (first value) to another value (second value). When such a range is expressed, the range includes in some aspects one or both of the first value and the second value. Similarly, when values are expressed as approximations, by use of the antecedent 'about,' it will be understood that the particular value forms another aspect. It will be further understood that the endpoints of each of the ranges are significant both in relation to the other endpoint, and independently of the other endpoint. It is also understood that there are a number of values disclosed herein, and that each value is also herein disclosed as "about" that particular value in addition to the value itself. For example, if the value "10" is disclosed, then "about 10" is also disclosed. It is also understood that each unit between two particular units are also disclosed. For example, if 10 and 15 are disclosed, then 11, 12, 13, and 14 are also disclosed.

As used herein, the terms "about" and "at or about" mean that the amount or value in question can be the designated value, approximately the designated value, or about the same as the designated value. It is generally understood, as used herein, that it is the nominal value indicated ±10% variation unless otherwise indicated or inferred. The term is intended to convey that similar values promote equivalent results or effects recited in the claims. That is, it is understood that amounts, sizes, formulations, parameters, and other quantities and characteristics are not and need not be exact, but can be approximate and/or larger or smaller, as desired, reflecting tolerances, conversion factors, rounding off, measurement error and the like, and other factors known to those of skill in the art. In general, an amount, size, formulation, parameter or other quantity or characteristic is "about" or "approximate" whether or not expressly stated to be such. It is understood that where "about" is used before a quantitative value, the parameter also includes the specific quantitative value itself, unless specifically stated otherwise.

Disclosed are the components to be used to prepare the compositions of the disclosure as well as the compositions themselves to be used within the methods disclosed herein. These and other materials are disclosed herein, and it is understood that when combinations, subsets, interactions, groups, etc. of these materials are disclosed that while specific reference of each various individual and collective combinations and permutation of these compounds cannot be explicitly disclosed, each is specifically contemplated and described herein. For example, if a particular compound is disclosed and discussed and a number of modifications that can be made to a number of molecules including the compounds are discussed, specifically contemplated is each and every combination and permutation of the compound and the modifications that are possible unless specifically indicated to the contrary. Thus, if a class of molecules A, B, and C are disclosed as well as a class of molecules D, E, and F and an example of a combination molecule, A-D is disclosed, then even if each is not individually recited each is individually and collectively contemplated meaning combinations, A-E, A-F, B-D, B-E, B-F, C-D, C-E, and C-F are considered disclosed. Likewise, any subset or combination of these is also disclosed. Thus, for example, the sub-group of A-E, B-F, and C-E would be considered disclosed. This concept applies to all aspects of this application including, but not limited to, steps in methods of making and using the compositions of the disclosure. Thus, if there are a variety of additional steps that can be performed it is understood that each of these additional steps can be performed with any specific aspect or combination of aspects of the methods of the disclosure.

References in the specification and concluding claims to parts by weight of a particular element or component in a composition or article, denotes the weight relationship between the element or component and any other elements or components in the composition or article for which a part by weight is expressed. Thus, in a compound containing 2 parts by weight of component X and 5 parts by weight component Y, X and Y are present at a weight ratio of 2:5, and are present in such ratio regardless of whether additional components are contained in the compound.

As used herein the terms "weight percent," "wt%," and "wt. %," which can be used interchangeably, indicate the percent by weight of a given component based on the total weight of the composition, unless otherwise specified. That is, unless otherwise specified, all wt% values are based on the total weight of the composition. It should be understood that the sum of wt% values for all components in a disclosed composition or formulation are equal to 100.

Unless otherwise stated to the contrary herein, all test standards are the most recent standard in effect at the time of filing this application.

Each of the raw materials used in example and/or comparative compositions described herein are either commercially available and/or the methods for the production thereof are known to those of skill in the art.

It is understood that the compositions disclosed herein have certain functions. Disclosed herein are certain structural requirements for performing the disclosed functions and it is understood that there are a variety of structures that can perform the same function that are related to the disclosed structures, and that these structures will typically achieve the same result.

### Thermoplastic Compositions

Aspects of the disclosure relate to a composition or article including a thermoplastic resin, wherein the thermoplastic resin includes: a polypropylene polymer; and from about 0.15 wt% to about 4.75 wt% of a filler including carbon nanotubes. The carbon nanotubes have an average diameter of about 5-15 nanometers (nm), a surface area of at least about 100 square meters per gram (m²/gr), and a volume resistivity of 10⁻³ Ohm.centimeters (Ohm.cm) or lower. The composition exhibits a volume electrical resistivity between 2.0E+14 Ohm.cm and 1.0E+03 Ohm.cm when measured according to ASTM D257. A molded sample of the composition exhibits a percent Absorbed Power measured in Transmission mode of at least 65% when observed according to a Free Space method at frequencies of from about 75 GHz to about 110 GHz. The combined weight percent value of all components does not exceed 100 wt. %, and all weight percent values are based on the total weight of the composition.

As used herein, "polypropylene" can be used interchangeably with poly(propene). The polypropylene polymer may include a polypropylene homopolymer, a polypropylene copolymer, or a combination thereof. In some aspects the composition includes from about 40 wt% to about 90 wt% of the polypropylene polymer. In further aspects the composition includes from about 40 wt% to about 85 wt%, or from about 40 wt% to about 80 wt%, or from about 40 wt% to about 75 wt%, or from about 40 wt% to about 70 wt%, or from about 40 wt% to about 65 wt%, or from about 45 wt% to about 90 wt%, or from about 45 wt% to about 85 wt%, or from about 45 wt% to about 80 wt%, or from about 45 wt% to about 75 wt%, or from about 45 wt% to about 70 wt%, or from about 45 wt% to about 65 wt%, or from about 50 wt% to about 90 wt%, or from about 50 wt% to about 85 wt%, or from about 50 wt% to about 80 wt%, or from about 50 wt% to about 75 wt%, or from about 50 wt% to about 70 wt%, or from about 50 wt% to about 65 wt% of the polypropylene polymer.

In some aspects the carbon nanotubes are included in the composition in a form of a polypropylene-based masterbatch. The polypropylene-based masterbatch has a carbon nanotube content of from about 15 wt% to about 25 wt% in certain aspects. In further aspects the polypropylene-based masterbatch has a carbon nanotube content of from about 18 wt% to about 22 wt%, or from about 19 wt% to about 21 wt%, or about 20 wt%. In specific aspects the composition includes from about 0.6 wt% to about 2.75 wt% of the carbon nanotubes. In particular aspects a composition including this content of carbon nanotubes has a percent Absorbed Power measured in Transmission mode of at least 80% when observed at a 77 GHz frequency.

In some aspects the composition further includes a reinforcing filler. Reinforcing fillers can include, but are not limited to, glass fibers, glass spheres, glass flake, flaked silicon carbide, ceramic fibers, calcium carbonate, kaolin, mica, clay, talc, feldspar, fillite, quartz, quartzite, perlite, tripoli, diatomaceous earth, or combinations thereof.

In some aspects the composition does not include electrically conductive fillers, such as but not limited to metallic fibers or carbon fibers, because they would negatively affect the microwave absorption properties of the material. The reinforcing filler, if included, may be selected such that they do not adversely affect the microwave (MW) interference properties (absorption, transmission, reflection) provided by the CNTs included in the compositions according to aspects of the disclosure. Glass fibers, for example, are mostly transparent (minimum absorption and reflection) to MW radiation. Thus, in a specific aspect the reinforcing filler includes glass fibers.

In certain aspects the composition includes from about 5 wt% to about 50 wt% of the reinforcing filler. In further aspects the reinforcing filler is present in an amount of from 5 wt% to about 45 wt%, or from 5 wt% to about 40 wt%, or from 5 wt% to about 35 wt%, or from 5 wt% to about 30 wt%, or from 5 wt% to about 25 wt%, or from 10 wt% to about 50 wt%, or from 10 wt% to about 45 wt%, or from 10 wt% to about 40 wt%, or from 10 wt% to about 30 wt%, or from 10 wt% to about 25 wt%, or from 15 wt% to about 50 wt%, or from 15 wt% to about 45 wt%, or from 15 wt% to about 40 wt%, or from 15 wt% to about 35 wt%, or from 15 wt% to about 30 wt%, or from 15 wt% to about 25 wt%, or about 20 wt%.

In some aspects the composition further includes a polycarbonate polymer. The polycarbonate polymer may include a polycarbonate homopolymer, a polycarbonate copolymer, or a combination thereof. In a particular aspect the polycarbonate polymer includes a polycarbonate-siloxane copolymer having a siloxane content of from about 5 wt% to about 45 wt%. In further aspects the polycarbonate-siloxane copolymer has a siloxane content of from about 4-8 wt% (e.g., transparent EXL available from SABIC having a siloxane content of about 6 wt%), from about 18-22 wt% (e.g., opaque EXL available from SABIC having a siloxane content of about 20 wt%), and/or from about 35-45 wt% (such as a 40 wt% siloxane copolymer available from SABIC). Compositions including a polycarbonate-siloxane copolymer according to aspects of the disclosure may have a total siloxane content of from about 2 wt% to about 10 wt%.

In certain aspects the composition includes from about 5 wt% to about 30 wt% of the polycarbonate polymer. In further aspects the polycarbonate polymer is present in the composition in an amount of from about 5 wt% to about 25 wt%, or from about 5 wt% to about 20 wt%, or from about 10 wt% to about 30 wt%, or from about 10 wt% to about 25 wt%, or from about 10 wt% to about 20 wt%, or about 15 wt%.

In certain aspects in which the composition includes a polycarbonate-siloxane copolymer as described above, the composition may have a notched Izod impact strength at - 30 °C of at least 40 Joules per meter (J/m) or an unnotched Izod impact strength at -30 °C of at least 165 J/m, wherein Izod impact strength is tested in accordance with ASTM D256 and ASTM D4812. In further aspects the composition has a notched Izod impact strength at -30 °C of from 40-100 J/m, or from 40-90 J/m, or from 40-80 J/m, or from 40-70 J/m, or from 40-60 J/m. In other aspects the composition has an unnotched Izod impact strength at -30 °C of from 165-220 J/m, or from 165-210 J/m, or from 165-200 J/m, or from 165-190 J/m, or from 165-185 J/m.

### Methods of Manufacture

The one or any foregoing components described herein may be first dry blended with each other, or dry blended with any combination of foregoing components, then fed into an extruder from one or multi-feeders, or separately fed into an extruder from one or multi-feeders. The fillers used in the disclosure may also be first processed into a masterbatch, then fed into an extruder. The components may be fed into the extruder from a throat hopper or any side feeders.

The extruders used in the disclosure may have a single screw, multiple screws, intermeshing co-rotating or counter rotating screws, non-intermeshing co-rotating or counter rotating screws, reciprocating screws, screws with pins, screws with screens, barrels with pins, rolls, rams, helical rotors, co-kneaders, disc-pack processors, various other types of extrusion equipment, or combinations including at least one of the foregoing.

The components may also be mixed together and then melt-blended to form the thermoplastic compositions. The melt blending of the components involves the use of shear force, extensional force, compressive force, ultrasonic energy, electromagnetic energy, thermal energy or combinations including at least one of the foregoing forces or forms of energy.

The barrel temperature on the extruder during compounding can be set at the temperature where at least a portion of the polymer has reached a temperature greater than or equal to about the melting temperature, if the resin is a semi-crystalline organic polymer, or the flow point (e.g., the glass transition temperature) if the resin is an amorphous resin.

The mixture including the foregoing mentioned components may be subject to multiple blending and forming steps if desirable. For example, the thermoplastic composition may first be extruded and formed into pellets. The pellets may then be fed into a molding machine where it may be formed into any desirable shape or product. Alternatively, the thermoplastic composition emanating from a single melt blender may be formed into sheets or strands and subjected to post-extrusion processes such as annealing, uniaxial or biaxial orientation.

The temperature of the melt in the present process may in some aspects be maintained as low as possible in order to avoid excessive thermal degradation of the components. In certain aspects the melt temperature is maintained between about 210°C and about 290°C, although higher temperatures can be used provided that the residence time of the resin in the processing equipment is kept relatively short. In some aspects the melt processed composition exits processing equipment such as an extruder through small exit holes in a die. The resulting strands of molten resin may be cooled by passing the strands through a water bath. The cooled strands can be chopped into pellets for packaging and further handling.

### Articles of Manufacture

In certain aspects, the present disclosure pertains to shaped, formed, or molded articles including the thermoplastic compositions. The thermoplastic compositions can be molded into useful shaped articles by a variety of means such as injection molding, extrusion, compression molding, rotational molding, blow molding and thermoforming to form articles and structural components of, for example, a radar sensor, camera, electronic control unit (ECU), support bracket, or radar enclosure. In a further aspect, the article is extrusion molded. In a still further aspect, the article is injection molded.

Exemplary articles further include surface features that provide the article with a high level of microwave absorption (>85%) and low level of microwave reflection (<2% or so) required for use in radar sensor or other similar applications. The surface appearance of the molded part may be modified to increase absorption and decrease reflection of microwave (MW) radiation. Two- and three-dimensional features molded or imprinted on the surface of the part (e.g., an internal radar component or external radar enclosure) may be provided to trap more of the incoming microwave radiation so reflection off the surface can be minimized. Features such as wedges, pyramids, cones, or many other geometric 2D or 3D shapes, added to the surface of a molded part, act as a microwave radiation sink to block electromagnetic waves by forcing them to bounce upon impacting the features, causing the waves to lose energy with each bounce, thus reducing reflection and increasing absorption according to the anechoic chamber principle. These features are of a certain geometric design to allow for the efficient dampening of the electromagnetic waves as they impinge on the part, thus facilitating the dissipation of energy contained in the wave enhancing absorption and decreasing reflection. For example 2D features, such as long triangular wedges, having a height/base ratio of from 2:1 to 10:1 or in specific aspects about 5:1 can provide certain materials a percent absorbed power above 85% and a percent reflected power below about 6% when tested at 77 GHz frequency. In some instances carbon-filled polymeric resins can be formed that absorb at least 90% and reflect less than 1% of incident microwave radiation when observed at 77 GHz of frequency on plaques that are 1/8 in of nominal thickness.

Further aspects of the disclosure include components of an automotive radar sensor (for example, the plate, enclosure, and cover), which are molded from a material including a polymer and carbon black powder as the microwave absorbing filler. The molded part has improved microwave absorption properties including microwave absorption efficiency, absorption bandwidth, shielding effectiveness, attenuation, and electrical surface resistivity and volume resistivity. In certain aspects the molded parts include micron-sized features that can trap additional microwave radiation compared with a part molded from the same composition that does not include the micron-sized features.

Yet further aspects include an article - such as but not limited to a radar sensor, camera, electronic control unit (ECU), support bracket, radar enclosure - which includes a molded part made from a microwave absorbing material (absorber) and that has at least two openings to allow the transmission of microwave radiation between a transmitting antenna and a receiving antenna located in a printed circuit board of the sensor.

In particular aspects an article includes a molded plaque including a surface with micron-sized features, wherein an area of the molded plaque including the micron-sized features exhibits a percent Absorbed Power measured in Transmission mode of at least 85% and a percent Reflected Power measured in Transmission mode of 2% or lower when observed according to a Free Space method at frequencies of from about 75 GHz to 110 GHz. The micron-sized features have a height to base ratio of between 2: 1 and 10: 1, and the base has a characteristic length that is linear or a representative dimension of a square, rectangle, polygon, circle, or a combination thereof.

In some aspects a 6" (inch) x 8" x 1/8" sample of the molded plaque including the micron-sized features on at least one square inch (1.0 in²) surface area of the sample has the indicated absorbed power and reflected power properties. In further aspects the molded plaque includes the micron-sized features on at least 1.5 in², or at least 2.0 in², or at least 2.5 in², or at least 3.0 in², or at least 3.5 in², or at least 4.0 in², or at least 4.5 in², or at least 5.0 in², or at least 6.0 in², or at least 7.0 in², or at least 8.0 in², surface area of the sample. In a specific aspect the molded plaque includes the micron-sized features on a surface area of the sample that is from 3.5 in² to 4.5 in², or about 4 in².

In some aspects the micron-sized features are two-dimensional in a linear direction or three-dimensional. In certain aspects the micron-sized features have a height to base ratio of between 3:1 to 9:1, or from 3:1 to 8:1, or from 3:1 to 7:1, or from 3:1 to 6:1, or from 4:1 to 9:1, or from 4:1 to 8:1, or from 4:1 to 7:1, or from 4:1 to 6:1, or about 5:1.

In particular aspects the base has a characteristic length that is a representative dimension of polygon, wherein the polygon is a triangle.

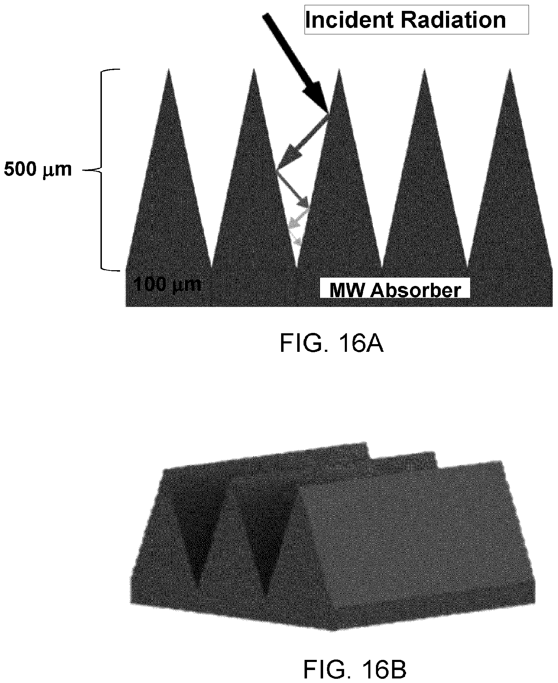

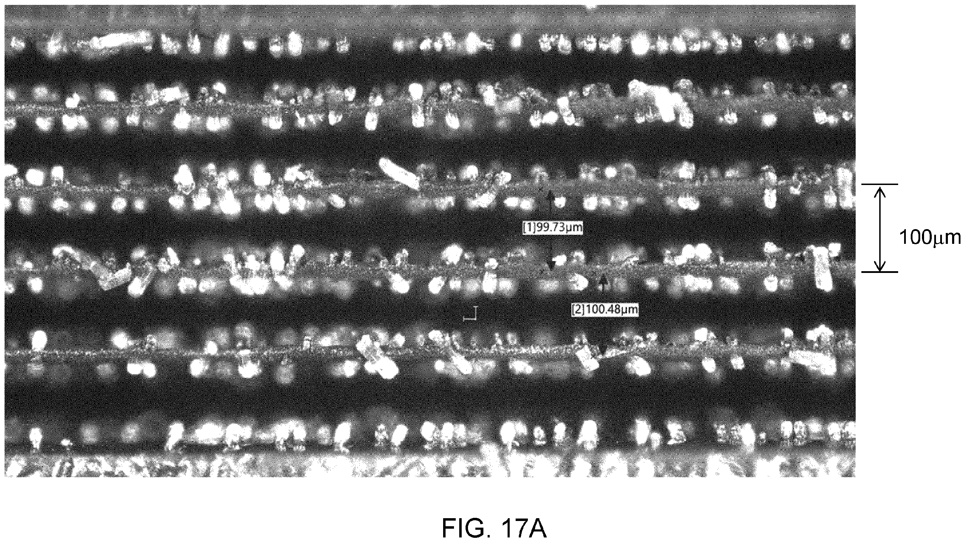

In further aspects neither the base nor the height of the micron-sized features have a dimension greater than 1000 micron (µm). It will be recognized, however, that if the features are two-dimensional in a linear direction the linear direction may have a length of greater than 1000 micron. See, for example, FIGS. 16B and 17A.

In some aspects the article including the micron-sized features includes a thermoplastic resin according to any of the aspects described herein, and in particular includes a polypropylene polymer and from about 0.15 wt% to about 4.75 wt% of a filler including carbon nanotubes. In a specific aspect the molded plaque includes a polypropylene polymer, and from about 0.15 wt% to about 4.75 wt% of a filler including carbon nanotubes, wherein the carbon nanotubes have an average diameter of about 5-15 nm, a surface area of at least about 100 m²/gr, and a volume resistivity of 10⁻³ Ohm.cm or lower.

Various combinations of elements of this disclosure are encompassed by this disclosure, e.g., combinations of elements from dependent claims that depend upon the same independent claim.

### Aspects of the Disclosure

In various aspects, the present disclosure pertains to and includes at least the following aspects.

Aspect 1. A composition comprising a thermoplastic resin, wherein the thermoplastic resin comprises:
a polypropylene polymer; and
from about 0.15 wt% to about 4.75 wt% of a filler comprising carbon nanotubes, wherein the carbon nanotubes have an average diameter of about 5-15 nanometers (nm), a surface area of at least about 100 square meters per gram (m²/gr), and a volume resistivity of 10⁻³ Ohm.centimeters (Ohm.cm) or lower,
wherein the composition exhibits a volume electrical resistivity between 2.0E+14 Ohm.cm and 1.0E+03 Ohm.cm when measured according to ASTM D257,
wherein a molded sample of the composition exhibits a percent Absorbed Power measured in Transmission mode of at least 65% when observed according to a Free Space method at frequencies of from about 75 GHz to about 110 GHz, and
wherein the combined weight percent value of all components does not exceed 100 wt. %, and all weight percent values are based on the total weight of the composition.

Aspect 2. The composition according to Aspect 1, wherein the composition comprises from about 0.6 wt% to about 2.75 wt% of the carbon nanotubes, and wherein the percent Absorbed Power measured in Transmission mode is at least 80% when observed at a 77 GHz frequency.

Aspect 3. The composition according to Aspect 1 or 2, wherein the polypropylene polymer comprises a polypropylene homopolymer, a polypropylene copolymer, or a combination thereof.

Aspect 4. The composition according to any of Aspects 1 to 3, wherein the carbon nanotubes are in a form of a polypropylene-based masterbatch.

Aspect 5. The composition according to Aspect 4, wherein the polypropylene-based masterbatch has a carbon nanotube content of from about 15 wt% to about 25 wt%.

Aspect 6. The composition according to any of Aspects 1 to 5, wherein the composition further comprises a reinforcing filler.

Aspect 7. The composition according to Aspect 6, wherein the reinforcing filler comprises glass fibers.

Aspect 8. The composition according to any of Aspects 1 to 7, wherein the composition further comprises a polycarbonate polymer.

Aspect 9. The composition according to Aspect 8, wherein the polycarbonate polymer comprises a polycarbonate-siloxane copolymer having a siloxane content of from about 5 wt% to about 45 wt%.

Aspect 10. The composition according to Aspect 9, wherein the composition has a notched Izod impact strength at -30 °C of at least 40 Joules per meter (J/m) or an unnotched Izod impact strength at -30 °C of at least 165 J/m, wherein Izod impact strength is tested in accordance with ASTM D256 and ASTM D4812.

Aspect 11. An article comprising the composition according to any of Aspects 1 to 10.

Aspect 12. The article according to Aspect 11, wherein the article is a component of an automotive radar sensor.

Aspect 13. An article comprising a molded plaque comprising a surface with micron-sized features,
wherein an area of the molded plaque comprising the micron-sized features exhibits a percent Absorbed Power measured in Transmission mode of at least 85% and a percent Reflected Power measured in Transmission mode of 2% or lower when observed according to a Free Space method at frequencies of from about 75 GHz to 110 GHz, and
wherein the micron-sized features have a height to base ratio of between 2: 1 and 10: 1, and
wherein the base has a characteristic length that is linear or a representative dimension of a square, rectangle, polygon, circle, or a combination thereof.

Aspect 14. The article according to Aspect 13, wherein the micron-sized features are two-dimensional in a linear direction or three-dimensional.

Aspect 15. The article according to Aspect 13 or 14, wherein the micron-sized features have a height to base ratio of between 4:1 to 6:1.

Aspect 16. The article according to any of Aspects 13 to 15, wherein the polygon is a triangle.

Aspect 17. The article according to any of Aspects 13 to 16, wherein neither the base nor the height of the micron-sized features have a dimension greater than 1000 micron (µm).

Aspect 18. The article according to any of Aspects 13 to 17, wherein the molded plaque comprises the composition according to any of Aspects 1 to 10.

Aspect 19. The article according to any of Aspects 13 to 17, wherein the molded plaque comprises a polypropylene polymer, and from about 0.15 wt% to about 4.75 wt% of a filler comprising carbon nanotubes, wherein the carbon nanotubes have an average diameter of about 5-15 nm, a surface area of at least about 100 m²/gr, and a volume resistivity of 10⁻³ Ohm.cm or lower.

### EXAMPLES

The following examples are put forth so as to provide those of ordinary skill in the art with a complete disclosure and description of how the compounds, compositions, articles, devices and/or methods claimed herein are made and evaluated, and are intended to be purely exemplary and are not intended to limit the disclosure. Efforts have been made to ensure accuracy with respect to numbers (e.g., amounts, temperature, etc.), but some errors and deviations should be accounted for. Unless indicated otherwise, parts are parts by weight, temperature is in °C or is at ambient temperature, and pressure is at or near atmospheric. Unless indicated otherwise, percentages referring to composition are in terms of wt%.

There are numerous variations and combinations of reaction conditions, e.g., component concentrations, desired solvents, solvent mixtures, temperatures, pressures and other reaction ranges and conditions that can be used to optimize the product purity and yield obtained from the described process. Only reasonable and routine experimentation will be required to optimize such process conditions.

### Example 1 - Compositions

Compositions formed according to aspects of the disclosure included one or more of the components listed in Table 1:

**Table 1 - Components**

| **Component** | **Description** | **Source** |
|---|---|---|
| PD702 PP | Pro-fax PD702 polypropylene homopolymer, MFR 35 g/10 min (230 °C, 2.16 kg) (ASTM D1238), Density 0.9 g/cm³ (ASTM D792) | LyondellBasell |
| CNT MB | Plasticyl^{™} PP2001 PP Masterbatch, 20 wt% NC7000 carbon nanotubes | Nanocyl |
| GF | StarStran^{®} JM738 Glass Fibers, 14 µm fiber diameter (ISO 1888), 738 sizing, 4 mm length, E-Glass | Johns Manville |
| PC-Si | Lexan^{™} EXL, polycarbonate-siloxane copolymer, 20 wt% siloxane | SABIC |

Example and comparative compositions were prepared as shown in Table 2, amounts are in wt% unless indicated otherwise:

**Table 2 - Example and Comparative PP/CNT Compositions**

| **Component** | **C1.1** | **Ex1.1** | **Ex1.2** | **Ex1.3** | **Ex1.4** | **C1.2** |
|---|---|---|---|---|---|---|
| PD702 PP | 64.5 | 63.5 | 62.5 | 60 | 50 | 40 |
| CNT MB | 0.5 | 1.5 | 2.5 | 5 | 15 | 25 |
| GF | 20 | 20 | 20 | 20 | 20 | 20 |
| PC-Si | 15 | 15 | 15 | 15 | 15 | 15 |
| Total (wt%) | 100 | 100 | 100 | 100 | 100 | 100 |
| | | | | | | |
| CNTs in blend (wt%) | 0.1 | 0.3 | 0.5 | 1 | 3 | 5 |
| PP in MB (wt%) | 0.4 | 1.2 | 2 | 4 | 12 | 20 |
| PP in blend (total wt%) | 64.9 | 64.7 | 64.5 | 64 | 62 | 60 |
| PP + CNTs in blend (total wt%) | 65 | 65 | 65 | 65 | 65 | 65 |

Certain mechanical properties of the Table 2 compositions were evaluated; results are shown in Table 3:

**Table 3 - Mechanical Properties of Table 2 Compositions**

| **Property** | **Unit** | **C1.1** | **Ex1.1** | **Ex1.2** | **Ex1.3** | **Ex1.4** | **C1.2** |
|---|---|---|---|---|---|---|---|
| Tensile, ASTM D 638, with extensometer, uniaxial, 5 mm/min | | | | | | | |
| Modulus of elasticity | MPa | 4494 | 4456 | 4576 | 4704 | 4852 | 4000 |
| Tensile stress @ break | MPa | 45.5 | 46.6 | 47.3 | 48.7 | 50.3 | 52.2 |
| Tensile elongation @ break | % | 1.8 | 1.9 | 1.9 | 1.9 | 1.9 | 2 |
| Flexural, ASTM D790, 3-point | | | | | | | |
| Flexural modulus | MPa | 3910 | 3790 | 3810 | 3890 | 4030 | 4210 |
| Flexural stress @ break | MPa | 68.3 | 67.7 | 67.2 | 70.7 | 74.1 | 77 |
| Izod Impact, ASTM D256, ASTM D4812 | | | | | | | |
| Notched, 23 °C | J/m | 51.7 | 45.8 | 45.4 | 43.4 | 38.8 | 40.1 |
| Unnotched, 23 °C | J/m | 174 | 170 | 177 | 184 | 198 | 204 |
| Notched, -30 °C | J/m | 54.1 | 52.7 | 49.9 | 47 | 40 | 37.1 |
| Unnotched, - 30 °C | J/m | 173 | 167 | 170 | 173 | 181 | 189 |
| Heat Deflection Temperature (HDT), ASTM D648, 3.2 mm thick sample | | | | | | | |
| HDT, 1.82 MPa | °C | 141 | 137 | 138 | 137 | 136 | 135 |
| HDT, 0.455 MPa | °C | 157 | 155 | 156 | 155 | 156 | 155 |
| Specific gravity, ASTM D792 | - | 1.078 | 1.08 | 1.083 | 1.087 | 1.099 | 1.113 |
| Electrical resistivity, ASTM D257 | | | | | | | |
| Surface resistivity (nominal 3.2 mm) | Ohm/sq | 5.77E+12 | 1.23E+13 | 1.41E+13 | 4.46E+13 | 5.15E+03 | 8.43E+02 |
| Volume resistivity (2.4 mm) | Ohm.cm | 1.40E+14 | 2.57E+14 | 2.66E+14 | 2.30E+13 | 2.89E+04 | 8.51E+02 |
| Melt flow rate (MFR), ASTM D 1238, 230 °C, 2.16 kg, 375 s dwell time | g/10 min | 31.2 | 25.1 | 21 | 14.5 | 2.8 | 0.36 |
| Melt viscosity (MV), GEP multi point method, 230 °C, 1000 1/s | Pa-s | 84.7 | 90.8 | 94.4 | 107.9 | 139.8 | 156.6 |

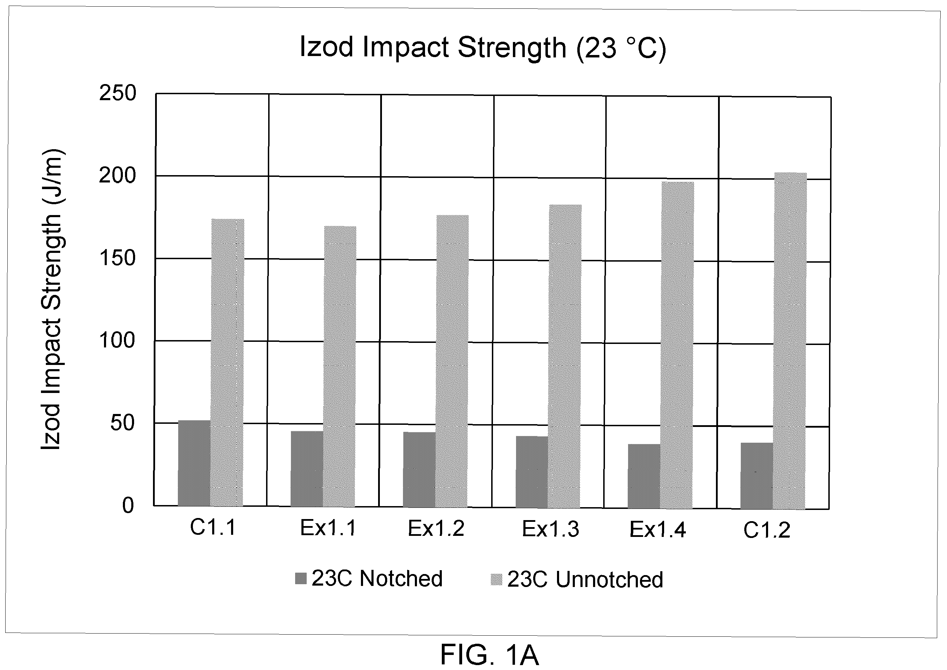

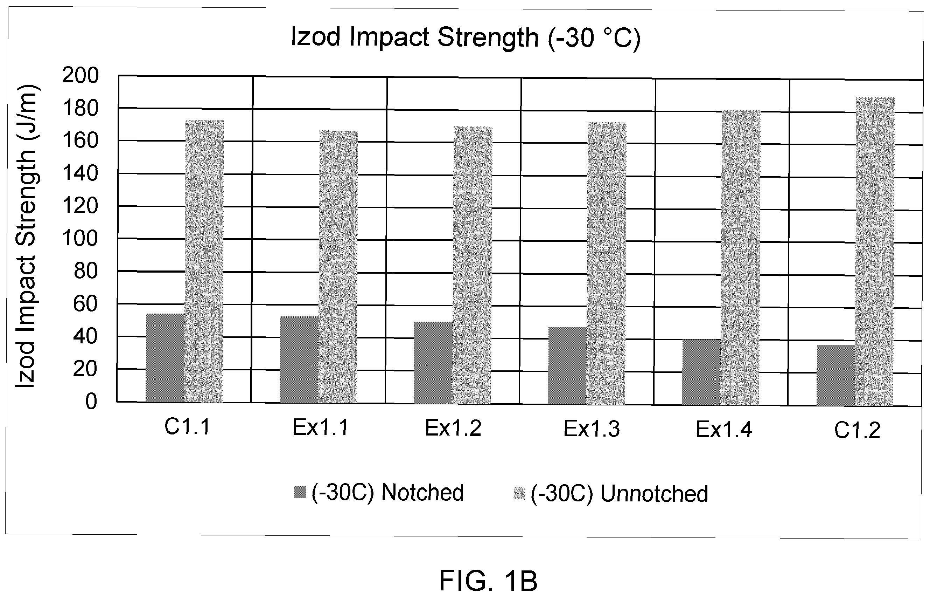

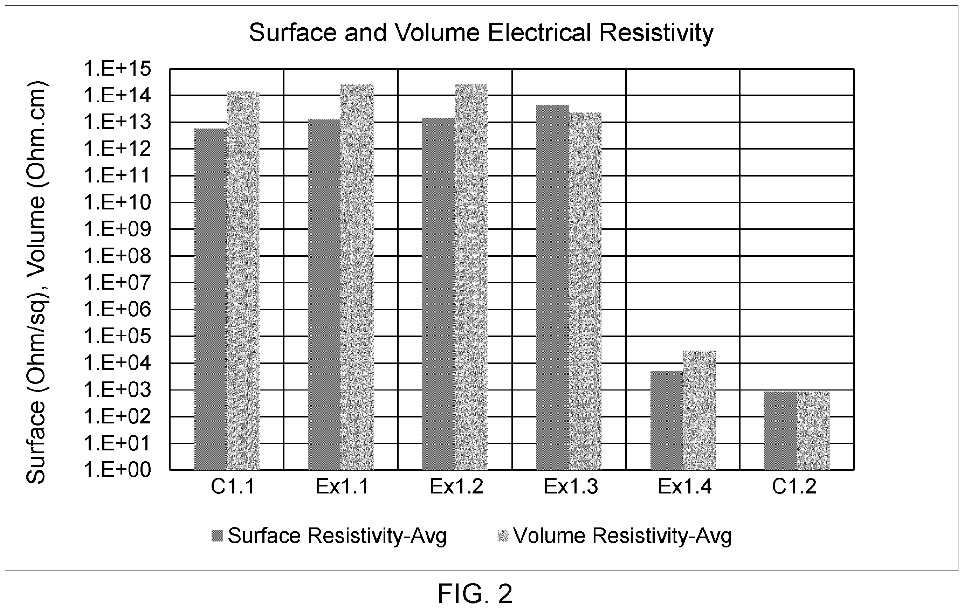

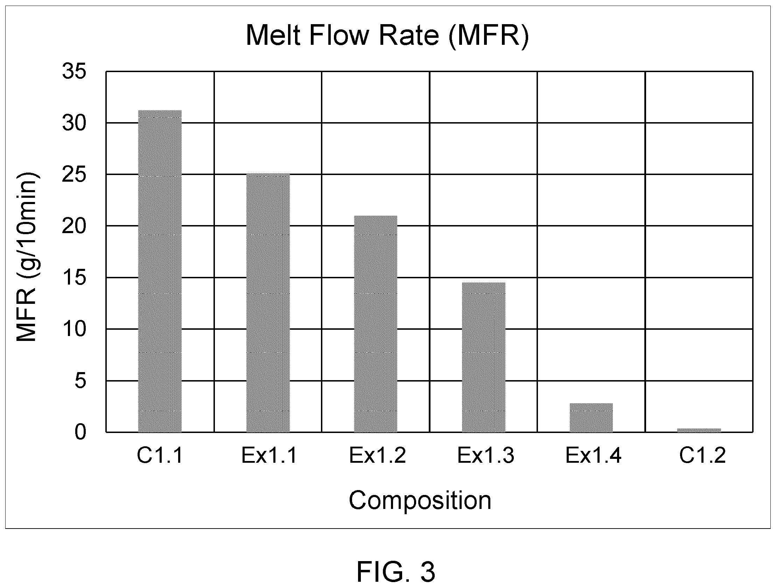

Graphical representation of some of the results are included at FIGS. 1A-3. FIGS. 1A and 1B show the notched and unnotched Izod impact properties at 23 °C and -30 °C, respectively. Surface and volume electrical resistivities are illustrated in FIG. 2. Melt flow rate is shown in FIG. 3.

From the data and figures it is observed that the IZOD impact strength of these materials remained almost unchanged when tested either at room temperature (23 °C) or low temperature (-30 °C), likely due to the presence of the polycarbonate-siloxane copolymer present in these formulations. FIG. 2 shows that electrical percolation seems to start at a concentration of carbon nanotubes of about 1 wt%. FIG. 3 shows that the viscosity of these materials increased (MFR decreased) when the concentration of carbon nanotubes in the formulation increased from about 0.1 wt% to 5 wt%.

Dielectric properties of the compositions described herein may be evaluated according to a Free Space Method. The Free Space Method includes a vector network analyzer, two antennae facing each other with a sample holder placed equidistant between them. The fundamental experimental quantities produced by the Free Space Method are referred to as Scattering parameters, or S-parameters, which are used to describe the input-output relationship between the different ports of an electric network in terms of amplitude and phase versus frequencies. The S-parameters are usually identified by a two-number subscript, with the first number in the subscript referring to the responding port, while the second number refers to the incident port. Thus, S21 means the response at port 2 due to a signal at port 1. The Scattering parameters are complex numbers having a real part and an imaginary part, and they describe the amount of microwave radiation that is either reflected off the sample or transmitted through the sample. The Scattering parameter S11 for Reflection, for example, represents a signal that originates in antenna 1 and that is received back at the same antenna after impinging on the sample and is reflected off. Similarly, the Scattering parameter S21 for Transmission represents a signal that originates in antenna 1 and is received by antenna 2 after being transmitted through the material under test. Scattering parameters for Reflection and Transmission that represent a signal that originates at antenna 2, S22 for Reflection and S12 for Transmission, can also be defined. The S-parameter matrix can be used to determine reflection coefficients and transmission gains from both sides of a two-port network for which four S-parameters, S11, S22, S21, and S12, as defined before, can be identified. A software is then used to convert the Scattering parameter output of the network analyzer to dielectric properties. Free-space measurement techniques provide a method for determining the dielectric permittivity and magnetic permeability of the magneto-dielectric material under test. These methods are contactless, that is the material under test does not make direct contact with any active component of the equipment involved in the measurement.

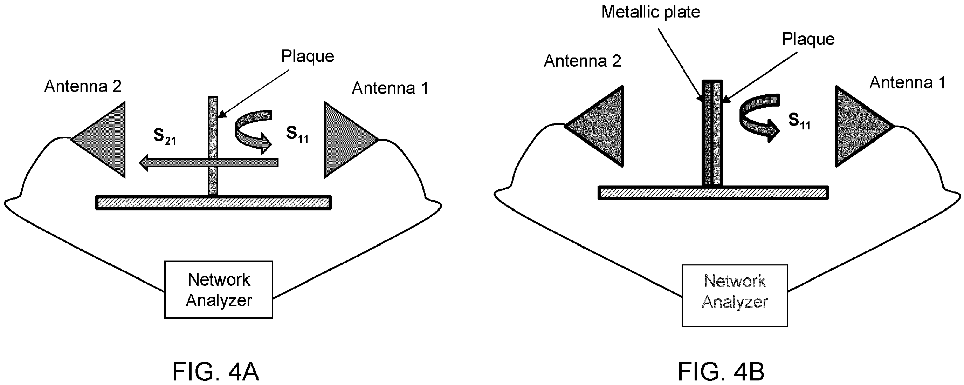

A schematic depiction of the apparatus used to determine the dielectric properties of the materials of this disclosure using the Free Space Method for un-backed and metal-backed samples is shown in FIGS. 4A and 4B, respectively. Injection molded plaques of 6 inch x 8 inch x 1/8 inch dimensions are used for these Free Space dielectric measurements.

Dielectric measurements using the Free Space Method can be performed in two different modes, the Transmission Mode and the Metal-backed Reflection Mode. The Transmission Mode of measurement measures three types of radiation: Absorption into the sample; Reflection off the sample; and Transmission through the sample. In the Metal-backed Reflection Mode of measurement, a metallic plate (stainless steel, aluminum, etc.) is placed between the material under test and the receiving antenna so transmission through the sample is completely suppressed, and only microwave Absorption into the material and microwave Reflection off the material can be evaluated. As the combination of the two antennae in Transmission mode can only measure the Scattering parameter for Reflection, S11, and the Scattering parameter for Transmission, S21, the amount (in percent) of radiation absorbed by the material under test is calculated as the difference between the total energy impinging on the sample (or 100%) and the sum of the amount (in percent) of radiation transmitted through the sample (measured from S21, and reaching the receiving antenna) and reflected off the sample (measured from S11, and returning back to the emitting antenna). In many applications, it is desirable to maximize percent Absorbed power, and to minimize percent Reflected power and percent Transmitted power when measurements are made using the Transmission mode. There are several dielectric properties that radar designers consider when selecting materials for microwave radar interference applications. Complex permittivity (real and imaginary parts), amount of radiation Absorbed, Reflected or Transmitted by the material, Shielding Effectiveness, Reflection Loss, and Attenuation are only some of the material properties of interest for the manufacture of plastic components for radar sensor applications. Frequency of the incoming radiation and material thickness are also important when trapping microwave energy that if not eliminated or minimized would interfere with the normal operation of the automotive electronic sensors.

Dielectric properties of the Table 2 compositions were evaluated at frequencies in the W-band (75-110 GHz); selected results at 77 GHz are shown in Table 4:

**Table 4 - Dielectric Properties of Table 2 Compositions (77 GHz)**

| **Property** | **C1.1** | **Ex1.1** | **Ex1.2** | **Ex1.3** | **Ex1.4** | **C1.2** |
|---|---|---|---|---|---|---|
| ε' (Real part of permittivity) | 2.851 | 3.440 | 3.937 | 5.294 | 9.988 | 14.241 |
| ε" (Imaginary part of permittivity) | 0.151 | 0.459 | 0.728 | 1.541 | 4.523 | 7.965 |
| ε"/ε' (tan δ) (Dissipation factor, Df) | 0.053 | 0.133 | 0.185 | 0.291 | 0.453 | 0.559 |
| Attenuation Constant (dB/cm) | -6.3 | -17.3 | -25.6 | -46.4 | -97.9 | -142.7 |
| Total Shielding Effectiveness (dB) | 2.60 | 6.01 | 9.05 | 16.73 | 33.9 | 47.85 |
| % Power in Metal-Backed Reflection (Absorption) | 40.26 | 88.91 | 95.00 | 82.23 | 71.54 | 63.98 |
| % Power in Transmission (Reflected) | 11.98 | 5.11 | 11.39 | 16.78 | 29.23 | 36.79 |
| % Power in Transmission (Absorbed) | 33.10 | 69.84 | 76.17 | 81.09 | 70.72 | 63.20 |
| % Power in transmission (Transmitted) | 54.92 | 25.05 | 12.44 | 2.13 | 0.04 | 0.00 |

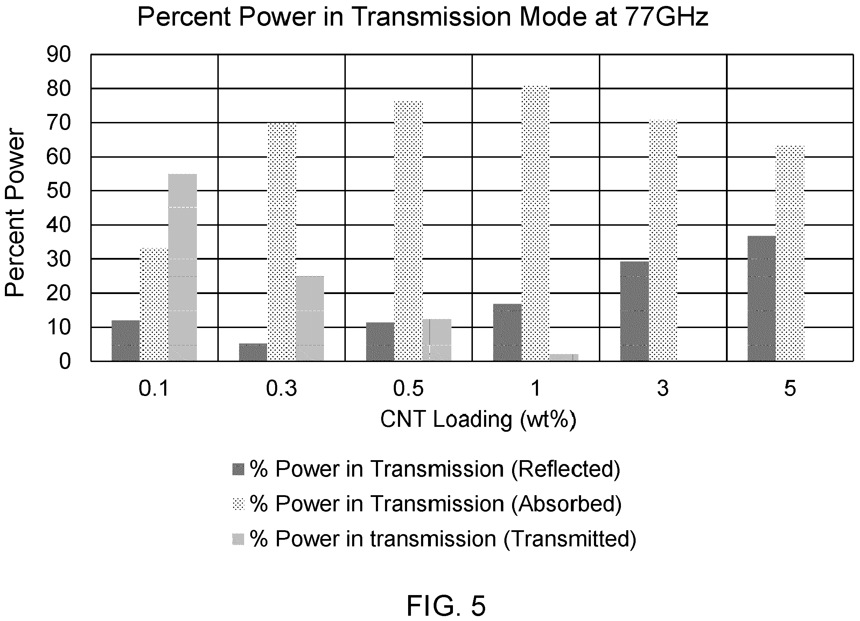

Percent power in transmission mode (reflected, absorbed and transmitted) at 77 GHz is graphically illustrated in FIG. 5. From the data in Table 4 and FIG. 5 it is observed that percent reflected power in transmission mode mostly increased and percent transmitted power in transmission mode decreased as the concentration of carbon nanotubes in the formulation increased and the material became increasingly more electrically conductive. The percent absorbed power in transmission mode first increased at a low concentration of carbon nanotubes from about 33% to about 76%, and then decreased from about 71% to about 63%, going through a maximum of about 81% at about 1 wt% of carbon nanotubes.

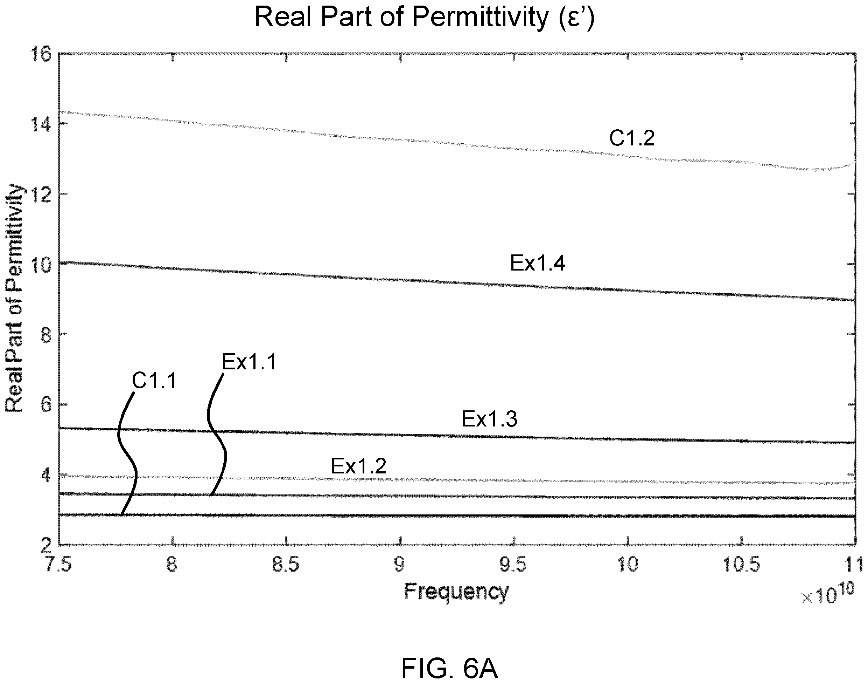

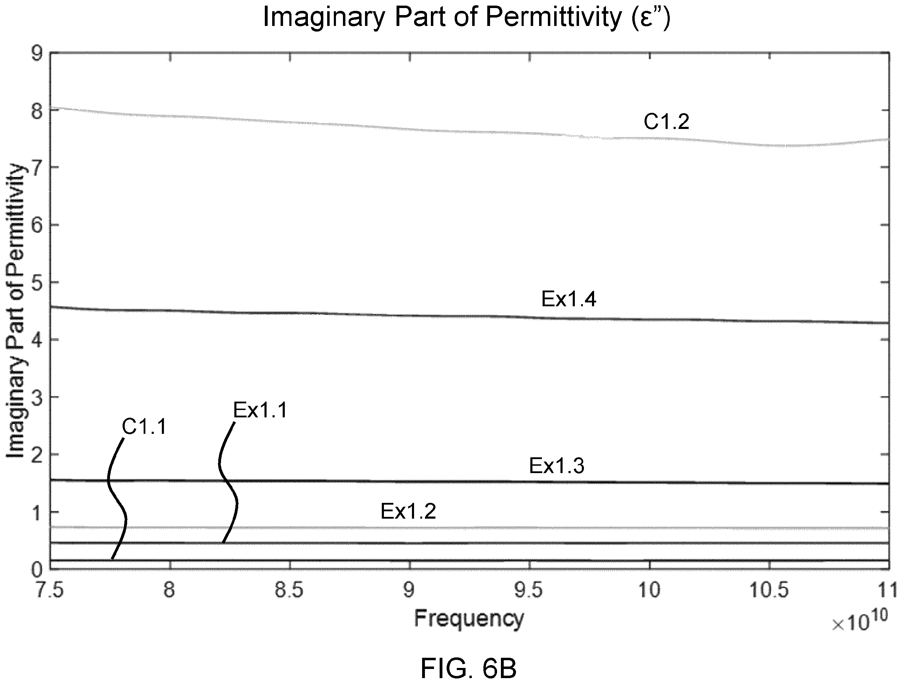

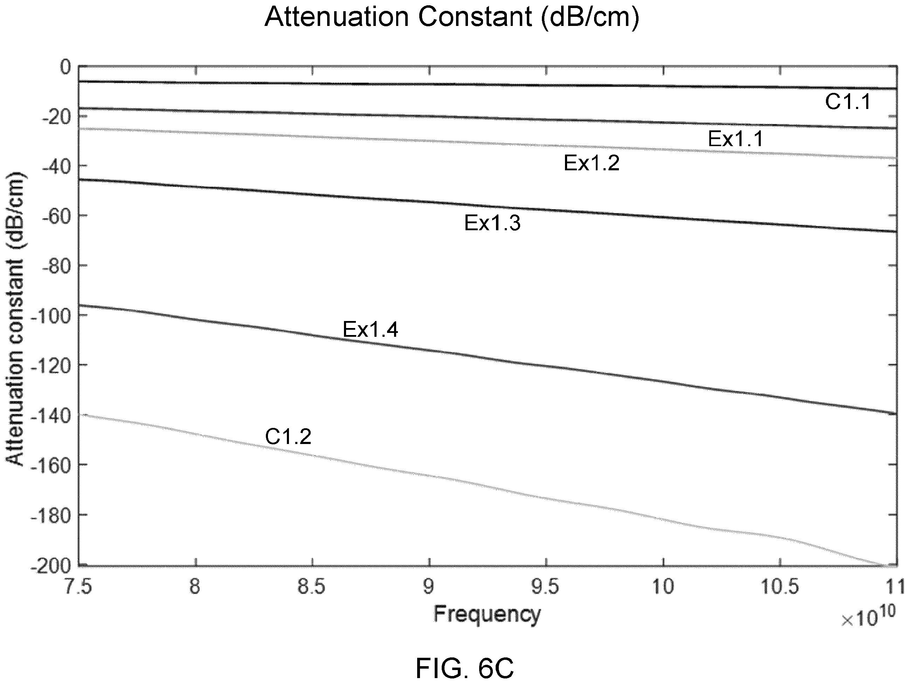

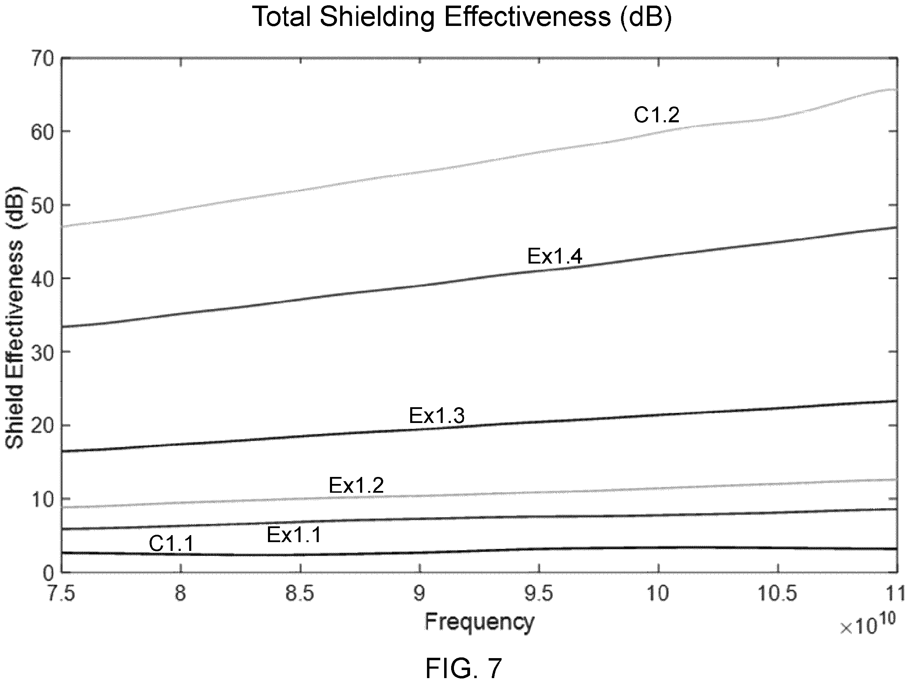

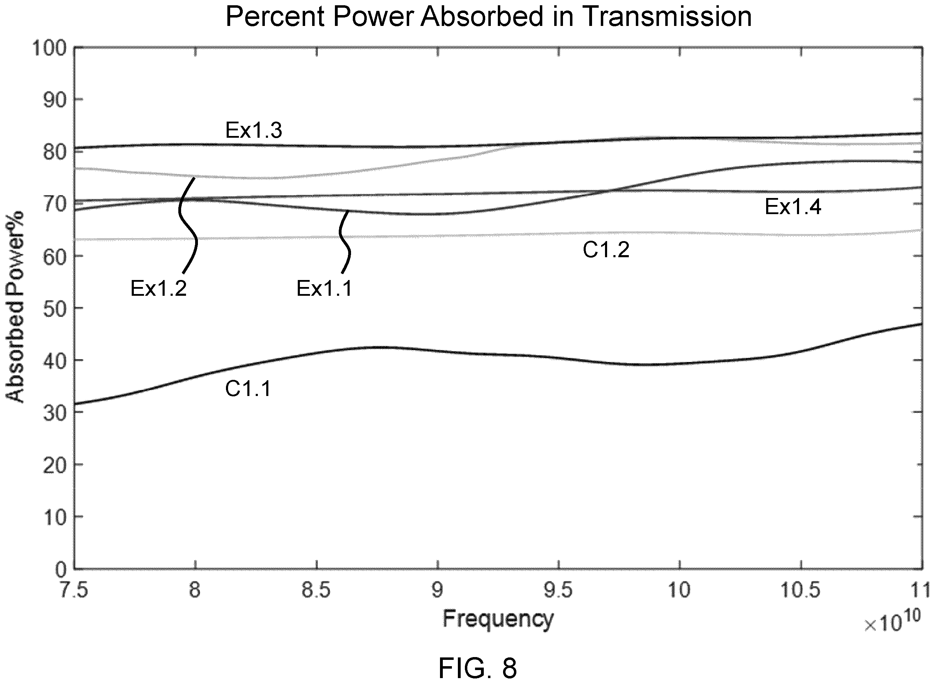

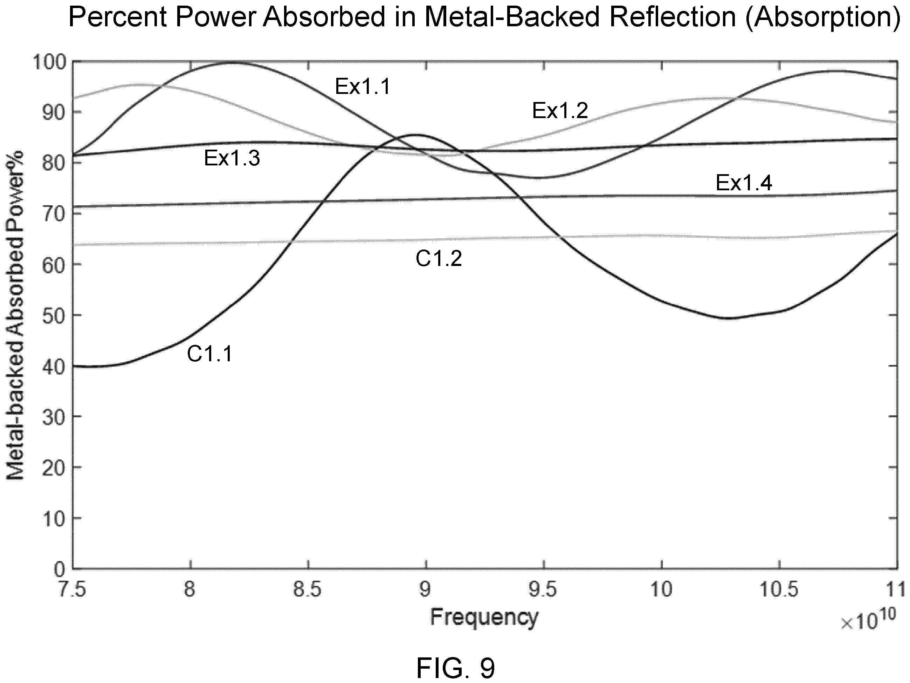

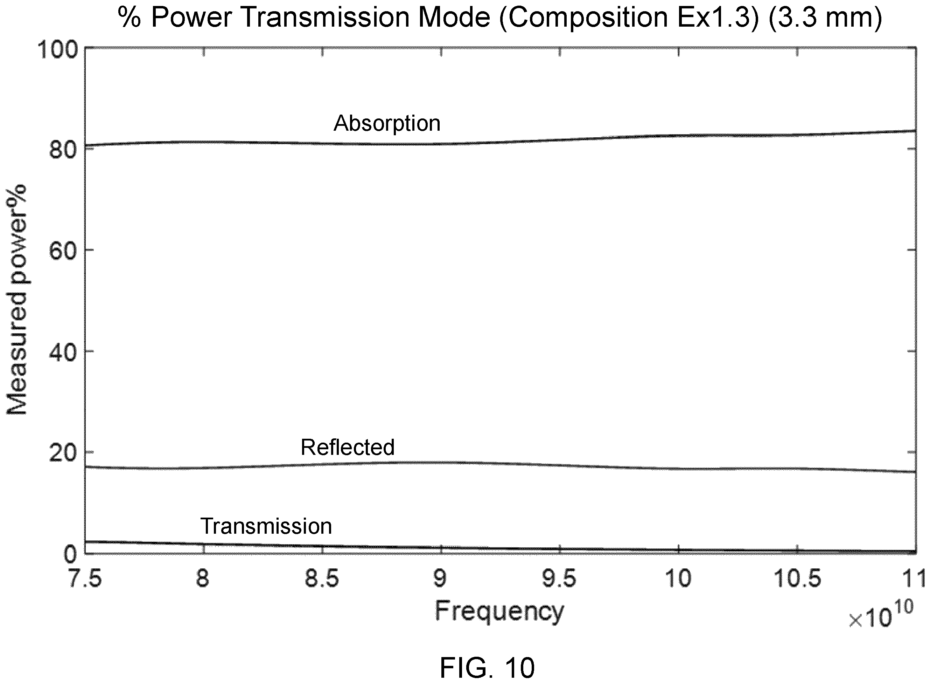

Dielectric properties of the Table 2 compositions in the complete W-band (75-110 GHz) are graphically illustrated in FIGS. 6A-10. FIGS. 6A-6C illustrate the real part of complex dielectric permittivity, imaginary part of complex dielectric permittivity, and attenuation constant, respectively. FIG. 7 illustrates the total shielding effectiveness, FIG. 8 illustrates the percent power absorbed in transmission mode, FIG. 9 illustrates the percent power absorbed in metal-backed reflection mode, and FIG. 10 illustrates the percent power in transmission mode (absorbed, reflected and transmitted) of composition Ex1.3. From these figures it is observed that the real and imaginary parts of the complex dielectric permittivity both increased as the concentration of carbon nanotubes in the composition increased for all the frequencies investigated. The same observation can be made for the attenuation constant (becoming more negative) and total shielding effectiveness (becoming more positive). FIG. 8 shows that the percent power absorbed in transmission mode remained fairly constant as the frequency of the incoming radiation increased from 75 to 110 GHz. FIG. 9 shows that the percent power absorbed in metal-backed reflection mode can reach values above 80% for certain frequencies and compositions as more radiation impinging on the metal plate behind the sample under test is reflected back and reabsorbed into the material. FIG. 10 shows that a 3.3 mm thick sample of composition Ex1.3 can absorb over 80% and reflect less than 20% for all the frequencies investigated.

### Example 2 - Articles Including Micron-Sized Features

Articles formed according to aspects of the disclosure included one or more of the components listed in Table 5:

**Table 5 - Components**

| **Component** | **Description** | **Source** |
|---|---|---|
| PD702 PP | Pro-fax PD702 polypropylene homopolymer, MFR 35 g/10 min (230 °C, 2.16 kg) (ASTM D1238), Density 0.9 g/cm³ (ASTM D792) | LyondellBasell |
| CB | Ensaco^{®} 360G carbon black, conductive, highly branched, 770 m²/g (ASTM D3037), OAN Absorption 320 ml/100g (ASTM D2414) | Imerys |
| GF | StarStran^{®} JM738 Glass Fibers, 14 µm fiber diameter (ISO 1888), 738 sizing, 4 mm length, E-Glass | Johns Manville |

Thermoplastic PP-based compositions were prepared as shown in Table 6, amounts are in wt% unless indicated otherwise:

**Table 6 -PP/CB Compositions**

| **Component** | **Ex2.1** | **Ex2.2** | **Ex2.3** | **Ex2.4** |
|---|---|---|---|---|
| PD702 PP | 96 | 90 | 76 | 70 |
| CB | 4 | 10 | 4 | 10 |
| GF | 0 | 0 | 20 | 20 |
| Total (wt%) | 100 | 100 | 100 | 100 |

The carbon powder (carbon black) was included to impart electrical conductivity and microwave interference properties to the compositions. Certain mechanical properties of compositions Ex2.3 and Ex2.4 were evaluated; results are shown in Table 7:

**Table 7 - Mechanical Properties of Table 6 Compositions**

| **Property** | | **Unit** | **Ex2.3** | **Ex2.4** |
|---|---|---|---|---|
| Tensile, ASTM D 638, with extensometer, uniaxial, 5 mm/min | | | | |
| | Modulus of elasticity | MPa | 4596 | 5154 |
| | Tensile stress @ break | MPa | 61.2 | 59.2 |
| | Tensile elongation @ break | % | 3 | 2.4 |
| Flexural, ASTM D790, 3-point | | | | |
| | Flexural modulus | MPa | 3590 | 4220 |
| | Flexural stress @ break | MPa | 9.8 | 41.3 |
| Izod Impact, ASTM D256, ASTM D4812 | | | | |
| | Notched, 23 °C | J/m | 47.9 | 36.8 |
| | Unnotched, 23 °C | J/m | 341 | 267 |
| Heat Deflection Temperature (HDT), ASTM D648, 3.2 mm thick sample | | | | |
| | HDT, 1.82 MPa | °C | 135 | 133 |
| | HDT, 0.455 MPa | °C | 157 | 157 |
| Specific gravity, ASTM D792 | | - | 1.061 | 1.102 |
| Electrical resistivity, ASTM D257 | | | | |
| | Surface resistivity, nominal 3.2 mm | Ohm/sq | 1.46E+14 | 6.76E+01 |
| | Volume resistivity, 2.4 mm | Ohm.cm | 1.94E+14 | 1.06E+02 |
| Melt flow rate (MFR), ASTM D 1238, 230 °C, 2.16 kg, 375 s dwell time | | g/10 min | 8.18 | 0.29 |
| Melt viscosity (MV), GEP multi point method, 230 °C, 1000 1/s | | Pa-s | 120.4 | 186.03 |

From the data in Table 7 it is observed that specific gravity and melt viscosity both increased, and surface/volume electrical resistivity and MFR both decreased when the concentration of carbon powder in the formulation increased from 4wt% to 10wt%.

Dielectric properties of the Table 6 compositions were evaluated at frequencies in the W-band (75-110 GHz); selected results at 77 GHz are shown in Table 8:

**Table 8 - Dielectric Properties of Table 6 Compositions (77 GHz)**

| **Property** | **Ex2.1** | **Ex2.2** | **Ex2.3** | **Ex2.4** |
|---|---|---|---|---|
| ε' (Real part of permittivity) | 3.919 | 6.341 | 4.697 | 8.685 |
| ε" (Imaginary part of permittivity) | 0.757 | 3.083 | 1.161 | 6.820 |
| ε"/ε' (tan δ) Dissipation factor (Df) | 0.193 | 0.486 | 0.247 | 0.785 |
| Attenuation Constant (dB/cm) | -26.7 | -83.4 | -37.2 | -152.1 |
| Total Shielding Effectiveness (dB) | 9.72 | 28.18 | 12.98 | 49.58 |
| % Power in Metal-Backed Reflection (Absorption) | 94.90 | 77.24 | 82.91 | 70.16 |
| % Power in Transmission (Reflected) | 13.16 | 23.02 | 17.42 | 30.81 |
| % Power in Transmission (Absorbed) | 76.17 | 76.82 | 77.54 | 69.19 |
| % Power in transmission (Transmitted) | 10.67 | 0.15 | 5.04 | 0.00 |

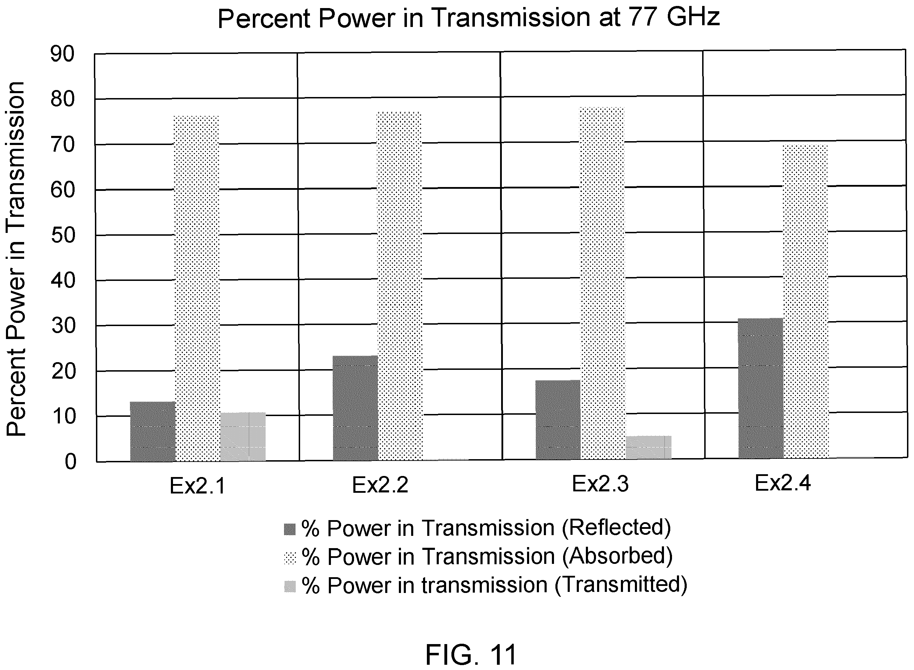

Percent power in transmission mode (reflected, absorbed and transmitted) at 77 GHz is graphically illustrated in FIG. 11. As Table 8 shows, these materials can absorb from about 69% to about 78% of the incoming microwave radiation at 77 GHz frequency, with the amount of energy reflected by these compositions at 77 GHz ranging from about 13% to 31%.

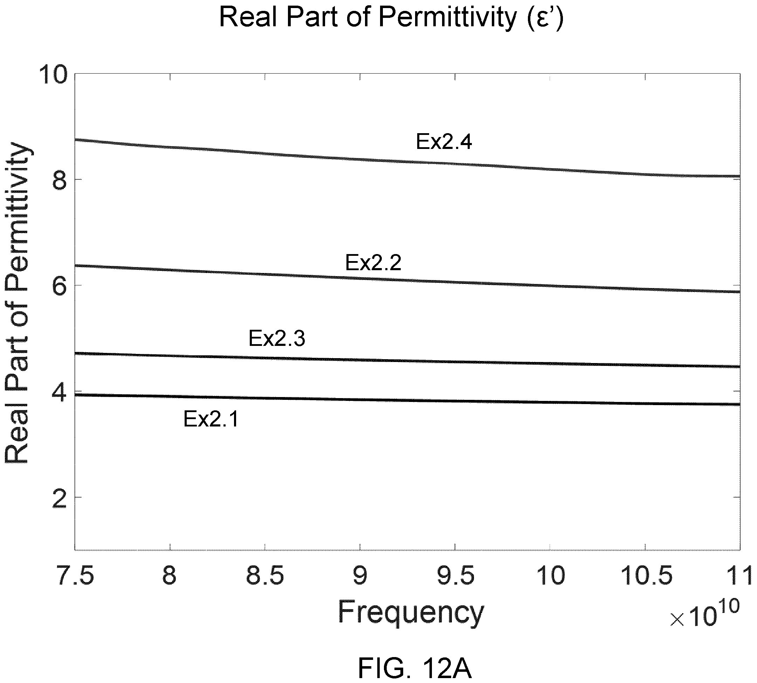

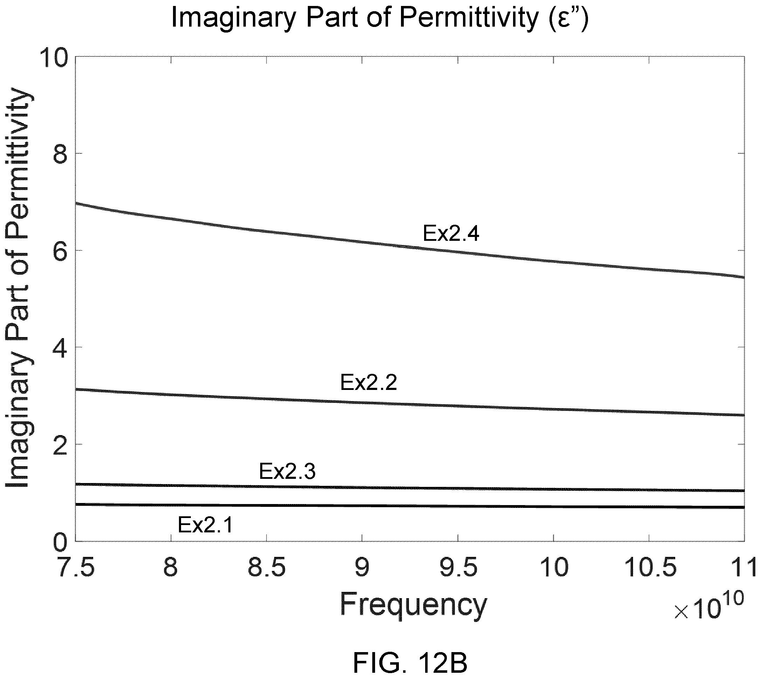

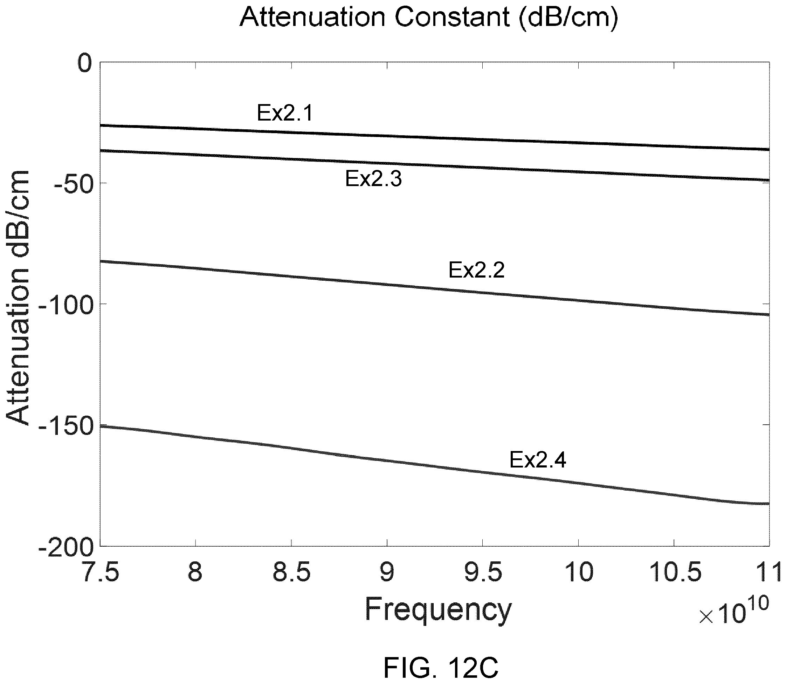

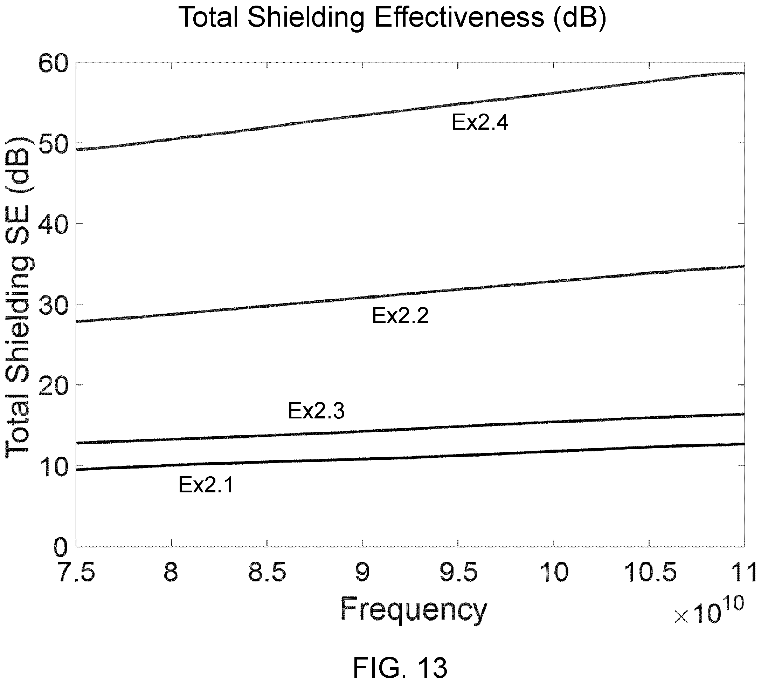

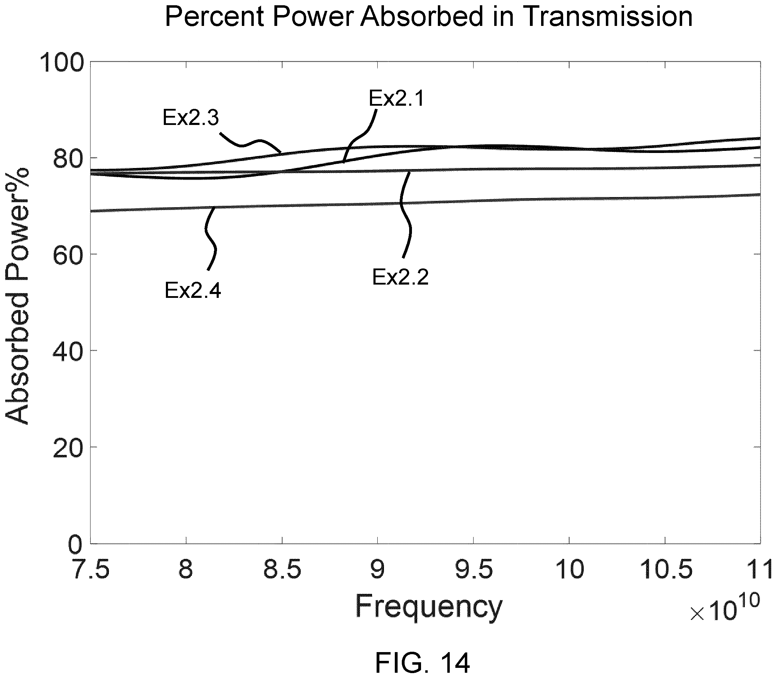

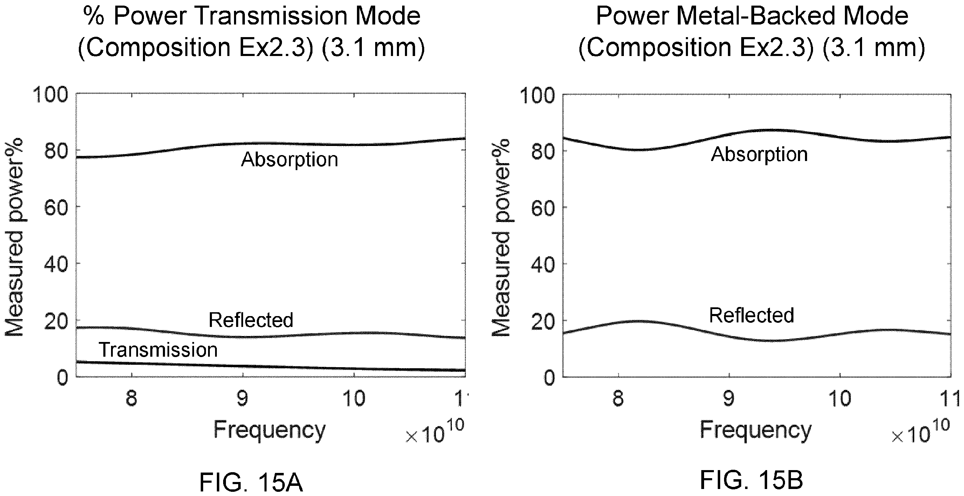

Dielectric properties of the Table 6 compositions in the entire W-band (75-110 GHz) are graphically illustrated in FIGS. 12A-15B. FIGS. 12A-12C illustrate the real part of complex dielectric permittivity, imaginary part of complex dielectric permittivity, and attenuation constant, respectively. FIG. 13 illustrates the total shielding effectiveness, FIG. 14 illustrates the percent power absorbed in transmission mode, and FIGS. 15A and 15B illustrate the percent power in transmission mode and percent power in metal-backed reflection mode (absorbed, reflected and transmitted), respectively, of composition Ex2.3 observed on a 3.1 mm thick sample. From these figures it is observed that the real and imaginary parts of the complex dielectric permittivity both increased as the concentration of carbon black powder in the composition increased for all the frequencies investigated. The same observation can be made for the attenuation constant (becoming more negative) and total shielding effectiveness (becoming more positive). FIG. 14 shows that the percent power absorbed in transmission mode remained fairly constant as the frequency of the incoming radiation increased from 75 to 110 GHz. Figures 15A and 15B show that the percent power in transmission mode and metal-backed reflection modes are similar, which can be explained by the fact that the sample measured in transmission mode showed a very low transmission for all the frequencies investigated.

In some applications, the above mentioned levels of microwave absorption and reflection may not be sufficient to trap incoming electromagnetic radiation that, if not eliminated or minimized, may interfere with the normal operation of the automotive radar sensor. These applications usually require combined levels of microwave absorption of 85% or higher and levels of microwave reflection of about 2% or lower. Through careful experimentation, two-dimensional features were laser imprinted on the surface of relatively smooth injection molded parts. It was observed that these features contributed to an increase of microwave absorption and a decrease of microwave reflection when compared to smooth molded parts of the same composition that did not contain these features. These geometric features were imprinted in the form of two-dimensional triangular wedges of about 100 micron (µm) of base, about 500 µm in height and 2 inches (in) in length, with no separation between consecutive rows of these aligned features. 2D front and side perspective sketches of the geometric features are shown in FIGS. 16A and 16B, respectively.

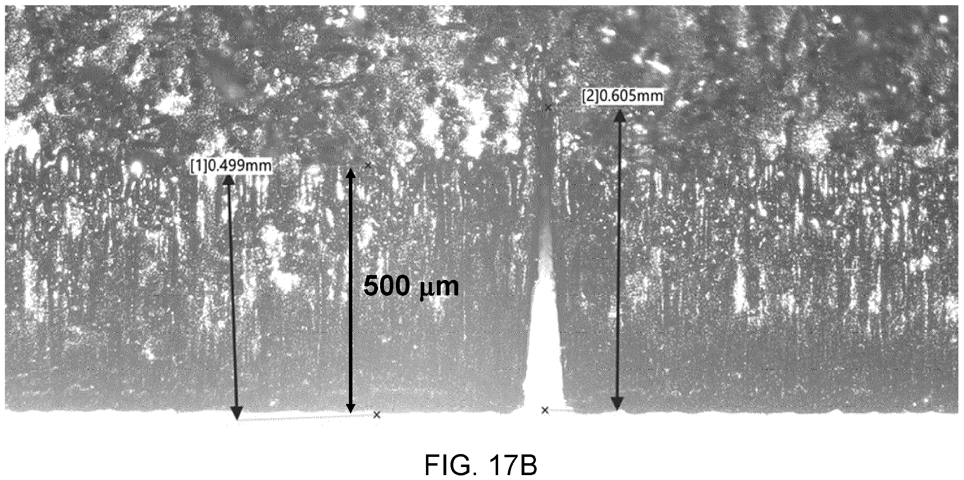

It is speculated that these features act to block the incoming electromagnetic waves by forcing them to bounce back and forth between neighboring wedges upon impacting the surface of the part, causing the waves to lose energy with each bounce, thus reducing Reflection and increasing Absorption according to the anechoic chamber principle. A 2 in x 2in square area was laser-imprinted with these features in the center of a 6 in x 8in rectangular plaque. This pattern was tested for its dielectric properties in the W-band (75-110 GHz frequency) using a vector network analyzer. FIGS. 17A and 17B are microscopy images showing a top view and cross-sectional view, respectively, of the 2D triangular wedges imprinted on the surface of smooth molded parts using laser patterning technology.

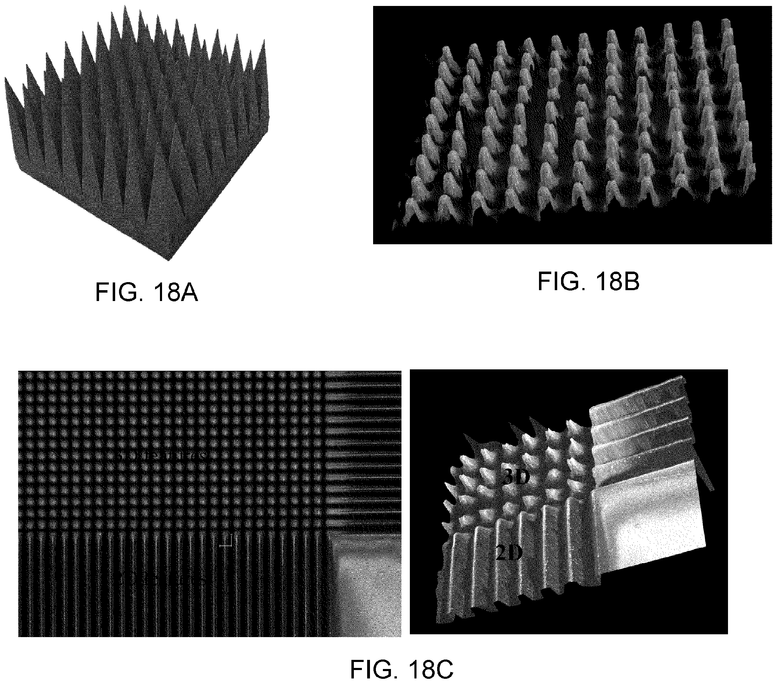

Similarly, three-dimensional features in the form of pyramids, cones, etc., could also be imprinted on the surface of smooth molded parts to enhance the microwave absorbing/reflecting effect observed in these materials even further. Exemplary three-dimensional images are shown in FIGS. 18A-18C.

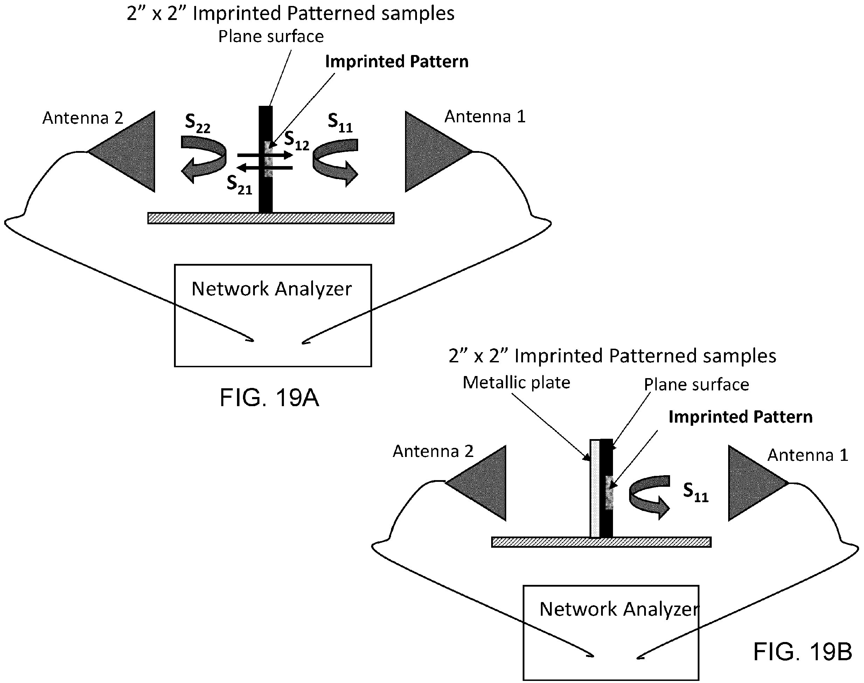

The 2D features described above were imprinted onto plaques of several compositions and their dielectric properties were evaluated and compared to those of plaques of the same composition that did not contain the features. The imprinted plaques were tested in transmission mode and metal-backed reflection mode using the set-ups depicted in FIGS. 19A and 19B, respectively.

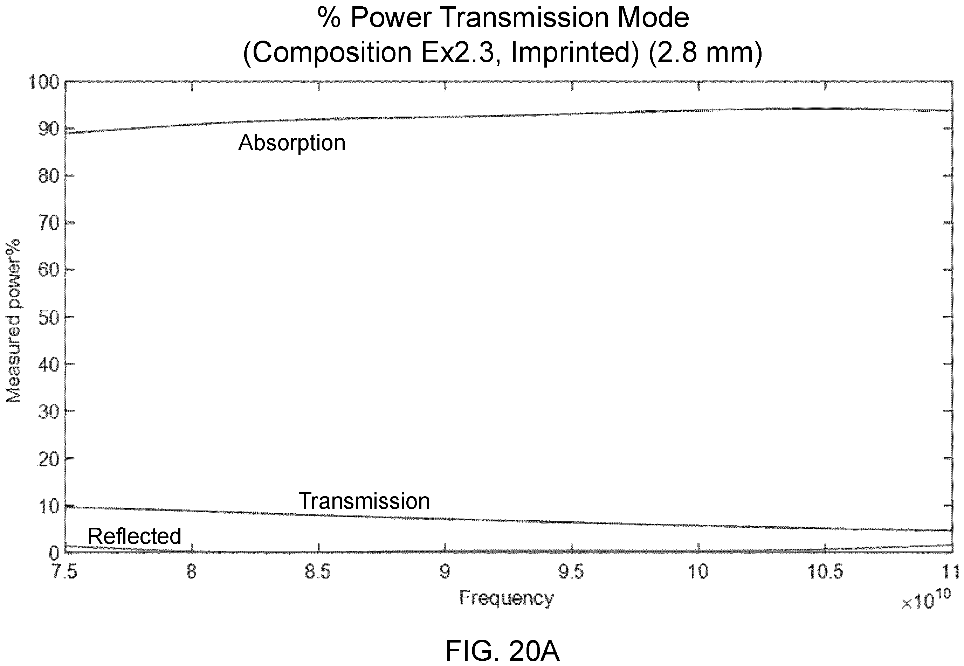

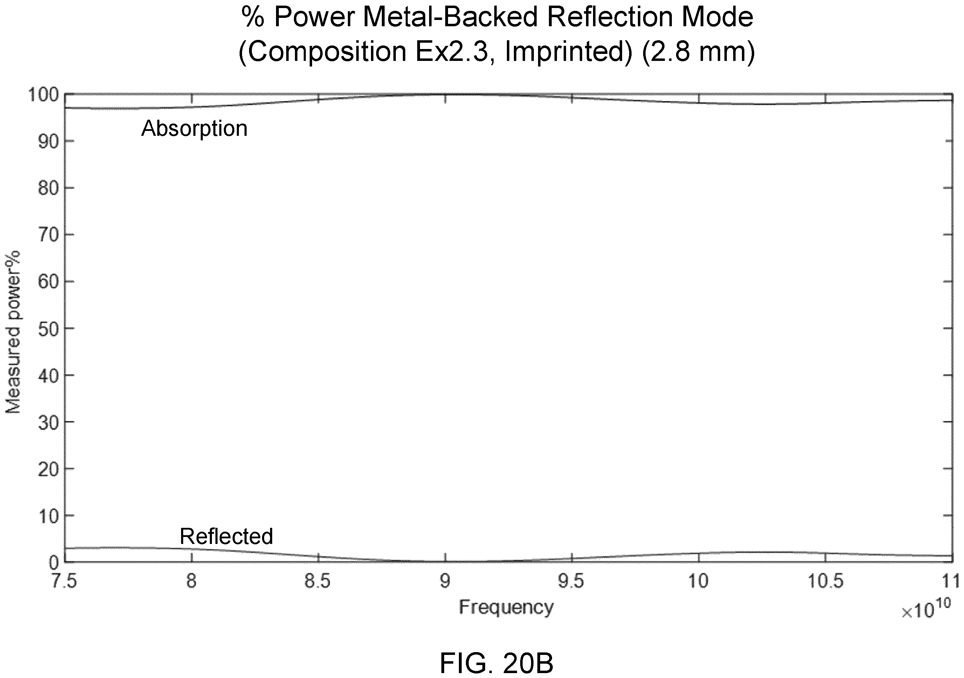

The dielectric properties of imprinted composition Ex2.3 in the W-band (75-110 GHz) are graphically illustrated in FIGS. 20A and 20B. Specifically, the percent power in transmission mode is shown in FIG. 20A, and the percent power in metal-backed reflection mode is shown in FIG. 20B. From FIG. 20A it is observed that in transmission mode absorption was at least 89% across the entire W-band, with a reflection of 1% or less across the band. From FIG. 20B it is observed that in metal-backed reflection mode absorption was at least 97% across the entire W-band, with a reflection of 3% or less across this band.

### Example 3 - Comparison to Conventional Carbon Black Compositions

Some conventional radar absorbing compositions including Ensaco^{®} 360 G carbon black are shown in Table 9:

**Table 9 - Conventional Carbon Black Compositions**

| **Component** | **C3.1** | **C3.2** | **C3.3** | **C3.4** | **C3.5** |
|---|---|---|---|---|---|
| PC homopolymer (SABIC) | 85.5 | 66.5 | | | |
| High flow polyetherimide (PEI) (SABIC) | | | 15 | | |
| Ultem^{™} 1010 PEI (SABIC) | | | 73 | | |
| Polybutylene terephthalate (PBT) 195 (SABIC) | | | | 52.63 | 40.93 |
| PBT 315 (SABIC) | | | | 37.37 | 29.07 |
| Glass fiber | | 20 | | | 20 |
| Ensaco^{®} 360G CB | 14.5 | 13.5 | 12 | 10 | 10 |
| **Total:** | 100 | 100 | 100 | 100 | 100 |

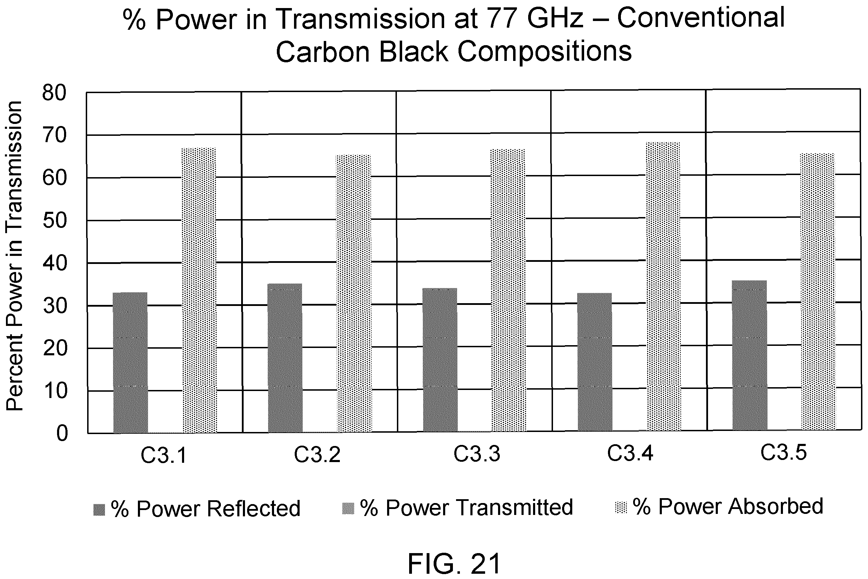

These conventional compositions are available from SABIC. As shown in FIG. 21, they all have similar dielectric properties at 77 GHz, with about 65% absorption and about 35% reflection and substantially no transmission.

Additional conventional compositions including carbon (Ensaco^{®} 360G CB or carbon nanotubes (CNTs)) are listed in Table 10:

**Table 10 - Conventional Carbon Compositions**

| **Component (wt%)** | | **C3.6** | **C3.7** | **C3.8** | **C3.9** |
|---|---|---|---|---|---|
| PBT 195 (SABIC) | | 40.93 | 40.93 | 56.14 | |
| PBT 315 (SABIC) | | 29.07 | 29.07 | 39.86 | |
| Ultradur^{®} PBT (BASF) | | | | | 95 |
| Glass fiber | | 20 | 26 | | |
| Ensaco^{®} 360G CB | | 10 | 4 | 4 | |
| CNTs in PBT MB (15 wt% CNT in MB) (Nanocyl) | | | | | 5 |
| | PBT from MB | | | | [4.25] |
| | CNT content (total) | | | | [0.75] |
| | PBT content (total) | | | | [99.25] |
| **Total (wt%):** | | 100 | 100 | 100 | 100 |

Plaques of compositions C3.6-C3.9 were prepared with and without 2D features as described above, and their dielectric properties were evaluated at 77 GHz and compared to example composition Ex2.3 from Example 2 above. The results are shown in Table 11:

**Table 11 - Dielectric Properties of Table 10 Compositions and Ex2.3 at 77 GHz**

| Composition | % Power Reflected | % Power Transmitted | % Power Absorbed | Sample Thickness (mm) |
|---|---|---|---|---|
| Ex2.3 | 17.42 | 5.04 | 77.54 | 3.115 |
| Ex2.3(I) | 0.88 | 9.37 | 89.75 | 2.788 |
| C3.6 | 35.10 | 0.00 | 64.89 | 2.344 |
| C3.6(I) | 17.01 | 0.01 | 82.98 | 2.313 |
| C3.7 | 19.94 | 3.14 | 76.92 | 2.884 |
| C3.7(I) | 5.37 | 6.22 | 88.41 | 2.84 |
| C3.8 | 18.66 | 5.00 | 76.34 | 3.077 |
| C3.8(I) | 4.86 | 7.79 | 87.35 | 3.03 |
| C3.9 | 19.23 | 4.11 | 76.66 | 3.132 |
| C3.9(I) | 6.90 | 7.80 | 85.30 | 2.883 |

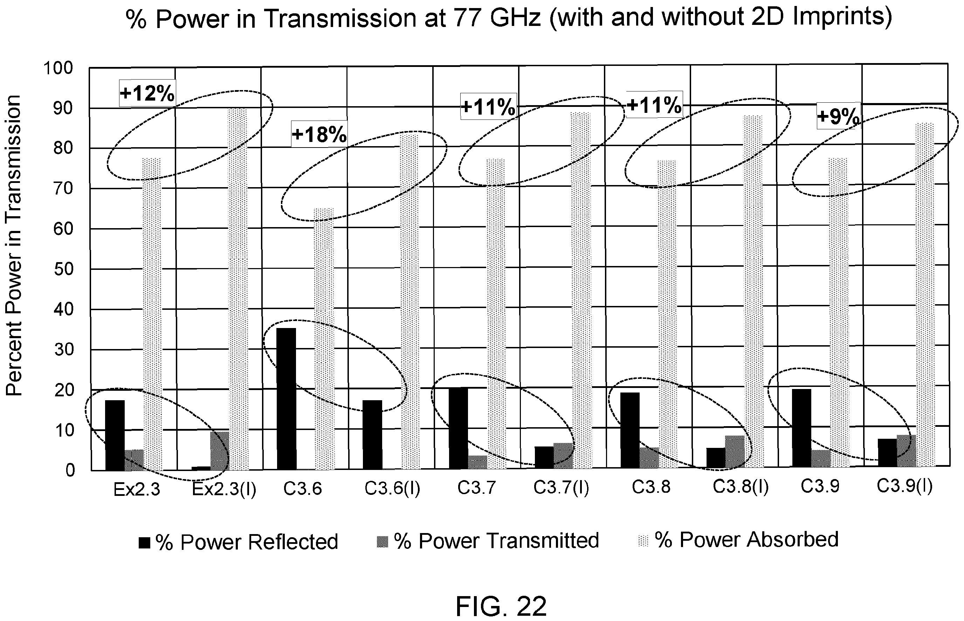

The imprinted plaques have the "(I)" designation. The results are shown graphically in FIG. 22. From the data it is observed that all of the compositions showed an increase of microwave absorption and a reduction of microwave reflection when the 2D triangular wedges were added to the surface of the parts - the improvement in percent absorption varied from 9-18 percentage points depending on the composition. In particular, it was observed that example composition Ex2.3 was able to reach a combined effect of at least 85% microwave absorption and less that 2% reflection when observed at a 77 GHz frequency. Compositions C3.6-C3.9 failed to reach either a 85% threshold for absorption or a <2% threshold for reflection. These results also showed that the effect of adding micron-size features to the surface of molded parts is not composition-independent but correlates to the formulation of the material used to mold the test parts, suggesting a synergistic effect between the geometric features and the composition of the tested part on which these features were imprinted. The reduction of reflection power effected by the presence of the 2D features varied, for example, from about 20:1 in composition Ex2.3 to about 4:1 in composition C3.8 to only about 2:1 in composition C3.6.

The above description is intended to be illustrative, and not restrictive. For example, the above-described examples (or one or more aspects thereof) may be used in combination with each other. Other aspects can be used, such as by one of ordinary skill in the art upon reviewing the above description. The Abstract is provided to comply with 37 C.F.R. §1.72(b), to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed aspect. Thus, the following claims are hereby incorporated into the Detailed Description as examples or aspects, with each claim standing on its own as a separate aspect, and it is contemplated that such aspects can be combined with each other in various combinations or permutations. The scope of the disclosure should be determined with reference to the appended claims, along with the full scope of equivalents to which such claims are entitled.

## Claims

1. A composition comprising a thermoplastic resin, wherein the thermoplastic resin comprises:
a polypropylene polymer; and
from about 0.15 wt% to about 4.75 wt% of a filler comprising carbon nanotubes, wherein the carbon nanotubes have an average diameter of about 5-15 nanometers (nm), a surface area of at least about 100 square meters per gram (m²/gr), and a volume resistivity of 10⁻³ Ohm.centimeters (Ohm.cm) or lower,
wherein the composition exhibits a volume electrical resistivity between 2.0E+14 Ohm.cm and 1.0E+03 Ohm.cm when measured according to ASTM D257,
wherein a molded sample of the composition exhibits a percent Absorbed Power measured in Transmission mode of at least 65% when observed according to a Free Space method at frequencies of from about 75 GHz to about 110 GHz, and
wherein the combined weight percent value of all components does not exceed 100 wt. %, and all weight percent values are based on the total weight of the composition.

2. The composition according to claim 1, wherein the composition comprises from about 0.6 wt% to about 2.75 wt% of the carbon nanotubes, and wherein the percent Absorbed Power measured in Transmission mode is at least 80% when observed at a 77 GHz frequency.

3. The composition according to claim 1 or 2, wherein the carbon nanotubes are in a form of a polypropylene-based masterbatch.

4. The composition according to claim 3, wherein the polypropylene-based masterbatch has a carbon nanotube content of from about 15 wt% to about 25 wt%.

5. The composition according to any of claims 1 to 4, wherein the composition further comprises a reinforcing filler comprising glass fibers.

6. The composition according to any of claims 1 to 5, wherein the composition further comprises a polycarbonate polymer comprising a polycarbonate-siloxane copolymer having a siloxane content of from about 5 wt% to about 45 wt%.

7. The composition according to claim 6, wherein the composition has a notched Izod impact strength at -30 °C of at least 40 Joules per meter (J/m) or an unnotched Izod impact strength at -30 °C of at least 165 J/m, wherein Izod impact strength is tested in accordance with ASTM D256 and ASTM D4812.

8. An article comprising the composition according to any of claims 1 to 7, wherein the article is a component of an automotive radar sensor.

9. An article comprising a molded plaque comprising a surface with micron-sized features,
wherein an area of the molded plaque comprising the micron-sized features exhibits a percent Absorbed Power measured in Transmission mode of at least 85% and a percent Reflected Power measured in Transmission mode of 2% or lower when observed according to a Free Space method at frequencies of from about 75 GHz to 110 GHz, and
wherein the micron-sized features have a height to base ratio of between 2:1 and 10: 1, and
wherein the base has a characteristic length that is linear or a representative dimension of a square, rectangle, polygon, circle, or a combination thereof.

10. The article according to claim 9, wherein the micron-sized features are two-dimensional in a linear direction or three-dimensional.

11. The article according to claim 9 or 10, wherein the micron-sized features have a height to base ratio of between 4: 1 to 6:1.

12. The article according to any of claims 9 to 11, wherein the polygon is a triangle.

13. The article according to any of claims 9 to 12, wherein neither the base nor the height of the micron-sized features have a dimension greater than 1000 micron (µm).

14. The article according to any of claims 9 to 13, wherein the molded plaque comprises the composition according to any of claims 1 to 7.

15. The article according to any of claims 9 to 13, wherein the molded plaque comprises a polypropylene polymer, and from about 0.15 wt% to about 4.75 wt% of a filler comprising carbon nanotubes, wherein the carbon nanotubes have an average diameter of about 5-15 nm, a surface area of at least about 100 m²/gr, and a volume resistivity of 10⁻³ Ohm.cm or lower.
